# EUROPEAN PATENT APPLICATION

(11) **EP 4 571 968 A1**
(43) Date of publication of application: **18.06.2025**
(21) Application number: 22955316.9
(22) Date of filing: 17.08.2022
(51) Int. Cl.: H01M 50/209, H01M 50/342

(54) **THERMAL MANAGEMENT COMPONENT, BOX BODY ASSEMBLY, BATTERY AND ELECTRIC APPARATUS**

(71) Applicant: Contemporary Amperex Technology (Hong Kong) Limited, Central (HK)
(72) Inventor: WANG, Pu, Ningde, Fujian 352100 (CN); ZHANG, Chenchen, Ningde, Fujian 352100 (CN); FENG, Jingjie, Ningde, Fujian 352100 (CN); LI, Xing, Ningde, Fujian 352100 (CN); LI, Zhenhua, Ningde, Fujian 352100 (CN); TANG, Yu, Ningde, Fujian 352100 (CN); XU, Chenyi, Ningde, Fujian 352100 (CN)
(74) Representative: Ziebig Hengelhaupt Intellectual Property Attorneys Patentanwaltskanzlei PartGmbB
(86) International application number: PCT/CN2022/113156
(87) International publication number: WO 2024/036535

(57) **Abstract**

Provided is a heat management component, a case assembly, a battery, and an electric device. The heat management component includes a heat exchange portion and a discharge portion. The heat exchange portion is configured to exchange heat with a battery cell. The discharge portion is configured to receive an emission from the battery cell. Further, the discharge portion is at least partially connected to the heat exchange portion in a thermally conductive manner.

## Description

### FIELD

The present disclosure relates to the field of battery technologies, and more particularly, to a heat management component, a case assembly, a battery, and an electric device.

### BACKGROUND

In the related art, a proper operation temperature needs to be kept during an operation of a battery cell, and a heat exchanger is usually provided to exchange heat with the battery cell. Meanwhile, in order to realize controllable pressure relief and emission discharging of the battery cell, a component for guiding an emission from the battery cell is usually provided. However, an overall assembly layout is unreasonable, resulting in a low space utilization rate.

### SUMMARY

The present disclosure aims to at least solve one of the technical problems existing in the related art. To this end, embodiments of the present disclosure provide a heat management component. The heat management component has saved occupied space, which is beneficial to an improvement in a space utilization rate. Meanwhile, safe and reliable use of a battery cell can be ensured.

Embodiments of the present disclosure further provide a case assembly having the heat management component as described above.

Embodiments of the present disclosure further provide a battery having the case assembly as described above and a battery having the heat management component as described above.

Embodiments of the present disclosure further provide an electric device having the above battery as described above.

A heat management component according to an embodiment of a first aspect of the present disclosure includes a heat exchange portion and a discharge portion. The heat exchange portion is configured to exchange heat with a battery cell. The discharge portion is configured to receive an emission from the battery cell. The discharge portion is at least partially connected to the heat exchange portion in a thermally conductive manner.

With the heat management component according to the embodiment of the present disclosure, by integrating the discharge portion with the heat exchange portion, the heat management component has good maintainability and is beneficial to saving its occupied space. When the heat management component is applied in the battery, a space utilization rate of the battery can be improved. In addition, the heat exchange portion can also exchange heat with at least part of the discharge portion to dissipate heat of the emission timely, thereby preventing the heat from being concentrated near an eruption position of the battery cell for a long time. Meanwhile, the heat exchange portion can also cool the emission to reduce a probability of thermal runaway spreading of the battery cell, thereby effectively improving safety of the battery cell during its relief and discharge of thermal runaway. Therefore, safe and reliable use of the battery cell can be ensured.

In some embodiments, the heat management component is of an elongated shape. A height of the heat management component is greater than a thickness of the heat management component. The heat exchange portion and the discharge portion are arranged in a thickness direction of the heat management component.

In some embodiments, in the thickness direction of the heat management component, the heat exchange portion is disposed at an outer side of the discharge portion in such a manner that the heat exchange portion is located closer to a battery cell arranged at an outer side of the heat management component in the thickness direction of the heat management component than the discharge portion.

In some embodiments, the heat exchange portion is arranged at each of two sides of the discharge portion.

In some embodiments, the discharge portion includes one discharge chamber configured such that an emission in the discharge chamber is adapted to exchange heat with the two heat exchange portions; or the discharge portion includes two discharge chambers arranged in the thickness direction of the heat management component, and each of the two discharge chambers is configured such that the emission in the discharge chamber is adapted to exchange heat with the heat exchange portion corresponding to the discharge chamber.

In some embodiments, the heat management component includes a body and a heat exchanger disposed at least one side of the body in a thickness direction of the body. The heat exchanger is constructed as the heat exchange portion. The discharge portion is constructed by the body alone, or the discharge portion is defined by the body and the heat exchanger together.

In some embodiments, a discharge chamber is defined by the discharge portion; and the heat exchanger has a first discharge path extending to the discharge chamber. The first discharge path is in communication with the discharge chamber, and the discharge chamber is adapted to receive the emission from the battery cell through the first discharge path.

In some embodiments, the heat exchanger is arranged at each of two sides of the body in the thickness direction of the body. A heat exchange chamber is defined by the heat exchanger. The heat exchange chamber has an inlet and an outlet to allow a heat exchange medium to flow to the heat exchange chamber through the inlet and flow out of the heat exchange chamber through the outlet. The heat exchange chambers at the two sides of the body in the thickness direction of the body are connected in series or parallel.

In some embodiments, a discharge chamber is defined by the discharge portion, and the discharge portion has inlet regions at two opposite sides of the discharge portion. The inlet regions are in communication with the discharge chamber. The discharge chamber is adapted to receive the emission from the battery cell through the inlet regions, and the inlet regions at the two opposite sides of the discharge portion are offset from each other in a length direction of the heat management component.

In some embodiments, the heat management component includes a body and heat exchangers arranged at two sides of the body in a thickness direction of the body. The heat exchanger is constructed as the heat exchange portion. The discharge portion is constructed by the body alone and the inlet is formed at the body, or the discharge portion is defined by the body and the heat exchangers together and the inlet is formed at the heat exchanger.

In some embodiments, a heat exchange chamber is defined by the heat exchange portion and is adapted to accommodate a heat exchange medium.

In some embodiments, the heat exchange portion has an inlet and an outlet to allow the heat exchange medium to flow to the heat exchange chamber through the inlet and flow out of the heat exchange chamber through the outlet.

In some embodiments, the heat exchange medium includes a gas, a liquid, or a gas-liquid mixture.

In some embodiments, the heat exchange chamber includes a plurality of heat exchange sub-chambers.

In some embodiments, the heat exchange portion has an inlet and an outlet. Each of the plurality of heat exchange sub-chambers is in communication with the inlet and the outlet.

In some embodiments, a first heat conductive member is disposed in the heat exchange chamber.

In some embodiments, the heat exchange chamber is divided into a plurality of heat exchange sub-chambers by the first heat conductive member.

In some embodiments, the heat management component includes two outer side plates arranged opposite to each other. At least one of the two outer side plates is constructed as the heat exchange portion, and the battery cell is adapted to be arranged at an outer side of the outer side plate in a thickness direction of the outer side plate.

In some embodiments, the outer side plate is adapted to exchange heat with a cylindrical battery. The outer side plate has a first groove formed at an outer side wall of the outer side plate to receive at least part of the cylindrical battery.

In some embodiments, the first groove has a curved groove surface.

In some embodiments, the outer side wall of the outer side plate has a plurality of first protrusions. The first groove is defined between two adjacent first protrusions of the plurality of first protrusions.

In some embodiments, the outer side plate is provided with a plurality of second protrusions at an inner side wall of the outer side plate. A second groove is defined between two adjacent second protrusions of the plurality of second protrusions. The plurality of second protrusions is opposite to the plurality of first protrusions in a thickness direction of the heat exchange portion, and the second groove is opposite to the first groove in the thickness direction of the heat exchange portion.

In some embodiments, the outer side plate has a planar outer side wall.

In some embodiments, the outer side plate is provided with a projection at an inner wall surface of the outer side plate. A heat exchange chamber is formed at a position corresponding to the projection.

In some embodiments, the outer side plate has an inlet region. The discharge chamber is adapted to receive the emission from the battery cell through the inlet region. The outer side plate has an insulator disposed at an outer peripheral region of the inlet region.

In some embodiments, a second heat conductive member is disposed between the heat exchange portion and the discharge portion.

A case assembly according to an embodiment of a second aspect of the present disclosure includes the heat management component according to the above embodiments of the first aspect of the present disclosure. The case assembly defines an accommodation cavity for accommodating a battery cell.

With the case assembly according to the embodiments of the present disclosure, by using the above heat management component, an improvement in a utilization rate of a space of the case assembly is facilitated, and use safety of the battery cell can be ensured.

In some embodiments, the case assembly further includes a side wall plate and a partition beam. The partition beam is located in a space enclosed by the side wall plate to divide the space into a plurality of accommodation cavities. At least one of the side wall plate and the partition beam is constructed as the heat management component.

In some embodiments, the partition beam includes a longitudinal beam extending in a length direction of the case assembly, and the longitudinal beam is constructed as the heat management component; or the partition beam includes a transverse beam extending in a width direction of the case assembly, and the transverse beam is constructed as the heat management component; or the partition beam includes a longitudinal beam extending in the length direction of the case assembly and a transverse beam extending in the width direction of the case assembly, and at least one of the longitudinal beam and the transverse beam is constructed as the heat management component.

In some embodiments, the partition beam is constructed as the heat management component. The side wall plate has a second discharge path in communication with a discharge chamber of the discharge portion.

In some embodiments, the case assembly further includes a top cover, and the heat management component is disposed at the top cover.

In some embodiments, the case assembly further includes a bottom plate, and the heat management component is disposed at the bottom plate.

A battery according to an embodiment of a third aspect of the present disclosure includes the case assembly according to the above embodiments of the second aspect of the present disclosure and a battery cell arranged in the accommodation cavity. The heat exchange portion is disposed at a side of the heat management component facing towards the battery cell.

With the battery according to the embodiments of the present disclosure, by using the above case assembly, the improvement of the space utilization rate is facilitated, and use safety and reliability of the battery can be improved.

In some embodiments, a cell row is disposed on at least one side of the heat management component in a thickness direction of the heat management component. The cell row includes a plurality of battery cells sequentially arranged in a length direction of the heat management component, and each of the plurality of battery cells is adapted to discharge the emission to the discharge portion independently.

In some embodiments, the discharge portion is provided with a plurality of cell rows at least one side of the discharge portion in a thickness direction of the discharge portion. The plurality of cell rows is sequentially arranged in a height direction of the discharge portion, and two cell rows of the plurality of cell rows disposed on at one side of the discharge portion in the thickness direction of the discharge portion are aligned with or offset from each other in a length direction of the discharge portion.

In some embodiments, a thickness direction of each of the plurality of battery cells is the same as a height direction of the heat management component.

In some embodiments, the number of the cell rows at one side of the discharge portion in the thickness direction of the discharge portion is smaller than the number of the battery cells of each of the cell rows at one side of the discharge portion in the thickness direction of the discharge portion; and/or the number of the cell rows at one side of the discharge portion in the thickness direction of the discharge portion ranges from 1 to 3.

In some embodiments, the battery further includes a fixing member disposed at a side of the cell row in a thickness direction of the cell row and abutting with the cell row at an outermost side. The fixing member is fixedly connected to the case assembly.

In some embodiments, the cell row is arranged at each of two sides of the heat management component in a thickness direction of the heat management component.

In some embodiments, battery cells of the cell rows at the two sides of the heat management component in the thickness direction of the heat management component are offset from each other.

In some embodiments, the battery cell has a pressure relief structure at a side surface of the battery cell facing towards the heat management component.

In some embodiments, a protection member is provided at the pressure relief structure of the battery cell, and covers the pressure relief structure. The protection member is configured to shield the emission discharged from the battery cell through the pressure relief structure.

In some embodiments, the battery cell includes a cylindrical battery. The heat exchange portion has a first groove at an outer surface of the heat exchange portion. The battery cell is arranged in the first groove.

In some embodiments, a shape of the first groove matches a shape of the cylindrical battery.

In some embodiments, the cylindrical battery is attached to a groove surface of the first groove.

In some embodiments, a length of the battery cell is greater than 0.6 m, and the length of the battery cell is greater than a width of the battery cell and a thickness of the battery cell. The heat management component is disposed at an end of the battery cell in a length direction of the battery cell.

In some embodiments, a length direction of the heat management component is perpendicular to the length direction of the battery cell.

A battery according to an embodiment of a fourth aspect of the present disclosure includes the heat management component according to the above embodiments of the first aspect of the present disclosure and a battery cell arranged on at least one side of the heat management component in a thickness direction of the heat management component. The heat exchange portion is arranged at a side of the heat management component facing towards the battery cell.

With the battery according to the embodiments of the present disclosure, by using the above heat management component, the improvement of the space utilization rate of the battery is facilitated, and the use safety of the battery cell can be ensured.

An electric device according to an embodiment of a fifth aspect of the present disclosure includes the battery according to the above embodiments of the third aspect of the present disclosure or the battery according to the above embodiments of the fourth aspect of the present disclosure. The battery is configured to supply power to the electric device.

With the electric device according to the embodiments of the present disclosure, by using the above battery, use safety of the electric device can be improved.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic view of an electric device in the related art.
FIG. 2 is a schematic view of a battery shown in FIG. 1.
FIG. 3 is a schematic assembly view of a heat management component and a battery cell according to an embodiment of the present disclosure.
FIG. 4 is an exploded view of the heat management component and the battery cell shown in FIG. 3.
FIG. 5 is a schematic view of the battery cell shown in FIG. 4.
FIG. 6 is another exploded view of the heat management component and the battery cell shown in FIG. 4.
FIG. 7 is an exploded view of the heat management component shown in FIG. 4.
FIG. 8 is a schematic assembly view of a heat management component and a battery cell according to another embodiment of the present disclosure.
FIG. 9 is a schematic assembly view of a heat management component and a battery cell according to yet another embodiment of the present disclosure.
FIG. 10 is a schematic assembly view of a heat management component and a battery cell according to still yet another embodiment of the present disclosure.
FIG. 11 is a schematic assembly view of a heat management component and a battery cell according to yet another embodiment of the present disclosure.
FIG. 12 is a schematic assembly view of a heat management component and a battery cell according to still yet another embodiment of the present disclosure.
FIG. 13 is a schematic assembly view of a heat management component and a battery cell according to yet another embodiment of the present disclosure.
FIG. 14 is an exploded view of a battery according to an embodiment of the present disclosure.
FIG. 15 is a partially schematic view of a case assembly shown in FIG. 14.
FIG. 16 is a schematic view of a case assembly according to another embodiment of the present disclosure.
FIG. 17 is a schematic view of a case assembly according to yet another embodiment of the present disclosure.
FIG. 18 is an exploded view of a battery according to another embodiment of the present disclosure.
FIG. 19 is another exploded view of the battery shown in FIG. 18 with an arrow indicating a flowing direction of an emission.
FIG. 20 is a schematic view of gas discharging of a heat management component shown in FIG. 19 with an arrow indicating a flowing direction of an emission.
FIG. 21 is a schematic view of gas discharging of a heat management component according to another embodiment of the present disclosure with an arrow indicating a flowing direction of an emission.
FIG. 22 is a schematic view of an electric device according to an embodiment of the present disclosure.

Reference numerals:
heat management component 100, case assembly 200, battery 300, electric device 400,
heat exchange portion 1, heat exchange chamber 11A, inlet 11a, outlet 11b, heat exchange sub-chamber 111, communication path 12,
discharge portion 2, discharge chamber 21, inlet region 21a,
body 3, heat exchanger 4,
first heat conductive member 5,
outer side plate 6,
first groove 6a, first protrusion 6b, second groove 6c, second protrusion 6d, projection 6e,
side wall plate 7, space 70, accommodation cavity 70a,
partition beam 8, transverse beam 81, longitudinal beam 82, top cover 9, bottom plate 10,
battery cell 11, cylindrical battery 110, attaching portion 110a, pressure relief structure 111,
cell row 12, end plate 121, heat insulation member 122, fixing member 13, protection member 14.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

Various embodiments or examples for implementing different structures of the present disclosure are provided below. In order to simplify the description of the present disclosure, components and configurations of specific examples are described below. These specific examples are merely for the purpose of illustration, rather than limiting the present disclosure. In addition, the same reference numerals and/or reference letters may appear in different examples of the present disclosure for the purpose of simplicity and clarity, instead of indicating a relationship between different embodiments and/or the discussed configurations. In addition, the present disclosure provides examples of various specific processes and materials. However, applications of other processes and/or the use of other materials are conceivable for those of ordinary skill in the art.

In the description of the present disclosure, it needs to be understood that, terms such as "center", "longitudinal", "lateral", "length", "width", "thickness", "over", "below", "front", "back", "left", "right", "vertical", "horizontal", "top", "bottom", "in", "out", "axial", "radial", "circumferential", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure. In addition, the features associated with "first" and "second" may explicitly or implicitly include at least one of the features. In the description of the present disclosure, "a plurality of" means at least two, unless otherwise specifically defined.

In the description of the embodiments of the present disclosure, it should be noted that, unless otherwise clearly specified and limited, technical terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components. For those skilled in the art, the specific meaning of the above-mentioned terms in the embodiments of the present disclosure can be understood according to specific circumstances.

In the description of this specification, descriptions with reference to the terms "an embodiment," "some embodiments," "schematic embodiments," "examples," "specific examples," or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

A battery cell in the present disclosure may include a lithium ion secondary battery, a lithium ion primary battery, a lithium sulfur battery, a sodium lithium ion battery, a sodium ion battery, or a magnesium ion battery, etc., which are not limited by the embodiments of the present disclosure. The battery cell may be of a cylindrical, flat, cuboid shape or other shapes, which are not limited in the embodiments of the present disclosure. The battery cell is generally based on a packaging method classified into three types including a cylindrical battery cell, a square battery cell, and a soft-pack battery cell, which are not limited in the embodiment of the present disclosure.

The battery mentioned in the present disclosure refers to a single physical module including one or more battery cells to provide a higher voltage and capacity. For example, the battery mentioned in the present disclosure may include a battery module or a battery pack. The battery generally includes a case for packaging one or more battery cells or a plurality of battery modules. In other embodiments of the present disclosure, the battery may also include no case. The case can prevent liquid or other foreign matters from affecting charging or discharging of the battery cell.

For example, the battery cell includes a housing, an electrode assembly, and an electrolyte. The housing is configured to accommodate the electrode assembly and the electrolyte. The electrode assembly consists of a positive electrode plate, a negative electrode plate, and a separator. An operation of the electrode assembly mainly relies on a movement of metallic ions between the positive and negative electrode plates. The positive electrode plate includes a positive current collector and a positive active material layer. The positive active material layer is coated on a surface of the positive current collector. A part of the positive current collector that is not coated with the positive active material layer protrudes from a part of the positive current collector that has been coated with the positive active material layer. The part of the positive current collector that is not coated with the positive active material layer serves as a positive tab. A lithium-ion battery is taken as an example, the positive current collector may be made of aluminum, and the positive active material may be lithium cobalt oxide, lithium iron phosphate, ternary lithium, lithium manganate, or the like. The negative electrode plate includes a negative current collector and a negative active material layer. The negative active material layer is coated on a surface of the negative current collector. A part of the negative current collector that is not coated with the negative active material layer protrudes from a part of the negative current collector that has been coated with the negative active material layer. The part of the negative current collector that is not coated with the negative active material layer serves as a negative tab. The negative current collector may be made of copper, and a negative active material may be carbon, silicon, etc. To ensure no fusing when a high current flows, a plurality of positive tabs is provided and stacked together, and a plurality of negative tabs is provided and stacked together.

The separator may be made of PP (polypropylene), PE (polyethylene), or the like. In addition, the electrode assembly may have a winding-type structure or a lamination-type structure, and the embodiments of the present disclosure are not limited thereto.

In a pressure relief structure on the battery cell mentioned in the present disclosure, when the battery cell has a too large internal pressure (for example, caused by excessive charging and other reasons), the pressure relief structure can release an internal gas from the battery cell to reduce the internal pressure in the battery cell, thereby avoiding deflagration and the like of the battery cell due too fast pressurization inside the battery cell. For example, the pressure relief structure may be an explosion-proof valve, an explosion-proof sheet, and the like.

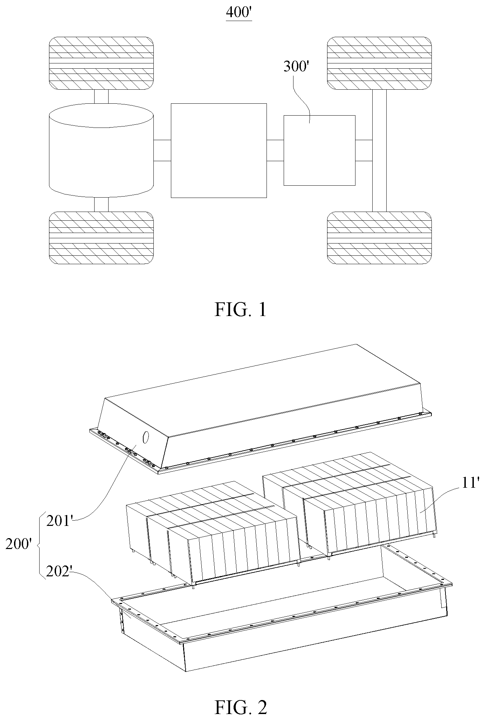

In some electric devices 100' (as shown in FIG. 1), a battery 300' (as shown in FIG. 2) is used for power supply. The battery 300' includes a case 200' and a battery cell 11'. The case 200' includes an upper housing 201' and a lower housing 202'. In the traditional technology, the battery has a cooling structure for exchanging heat with the battery cell and a discharge structure for receiving an emission from the battery cell. The cooling structure and the discharge structure are respectively arranged at different positions to be arranged separately, such that the cooling structure and the discharge structure need to occupy a great arrangement space, resulting in a low utilization rate of an internal space of the battery. Moreover, during pressure relief and discharging of the battery cell, a temperature of the emission is high, and heat is thus easily accumulated at a discharge position of the battery cell. As a result, the battery cell would be easily affected by a predetermined heat.

Based on this, after extensive study, a heat management component is proposed. The heat management component includes a heat exchange portion and a discharge portion. The heat exchange portion is configured to exchange heat with the battery cell. The discharge portion is configured to receive the emission from the battery cell. The discharge portion is at least partially connected to the heat exchange portion in a thermally conductive manner.

In the heat management component with the above structure, an integrated arrangement of the heat exchange portion and the discharge portion is realized. Meanwhile, the heat exchange portion can dissipate heat of the emission in time. In this way, the heat is prevented from being accumulated near an eruption position of the battery cell for a long time. Moreover, the heat exchange portion can also cool the emission to reduce a probability of thermal runaway spreading of the battery cell.

The battery cell according to the embodiments of the present disclosure may be, but is not limited to, an electric device such as a vehicle, a ship, or an aircraft. A power supply system of the electric device may be composed of a battery according to the present disclosure or the like to ensure use safety and reliability of the electric device.

The electric device according to the embodiments of the present disclosure may be, but is not limited to, an automobile, a cell phone, a tablet, a laptop computer, a ship, a spacecraft, an electric toy, an electric tool, and the like. The vehicle may be a fuel vehicle, a gas vehicle, a new energy vehicle, or a rail vehicle. The new energy vehicle may be a pure electric vehicle, a hybrid vehicle, or an extended-range vehicle. The spacecraft includes an airplane, a rocket, a space shuttle, a spaceship, or the like. The electric toy includes a stationary electric toy or a mobile electric toy, e.g., a game console, an electric car toy, an electric ship toy, and an electric airplane toy. The electric tool includes a metal cutting electric tool, a grinding electric tool, an assembling electric tool, and a railway power tool, e.g., an electric drill, an electric grinding machine, an electric wrench, an electric screwdriver, an electric hammer, an impact electric drill, a concrete vibrator, and an electric planer.

A heat management component 100 according to an embodiment of a first aspect of the present disclosure will be described below with reference to the accompanying drawings.

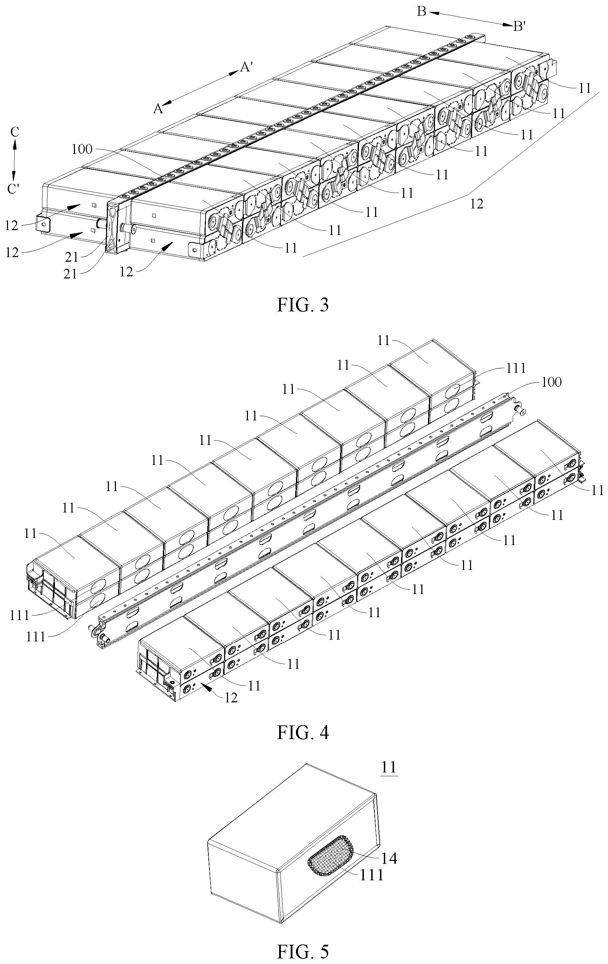

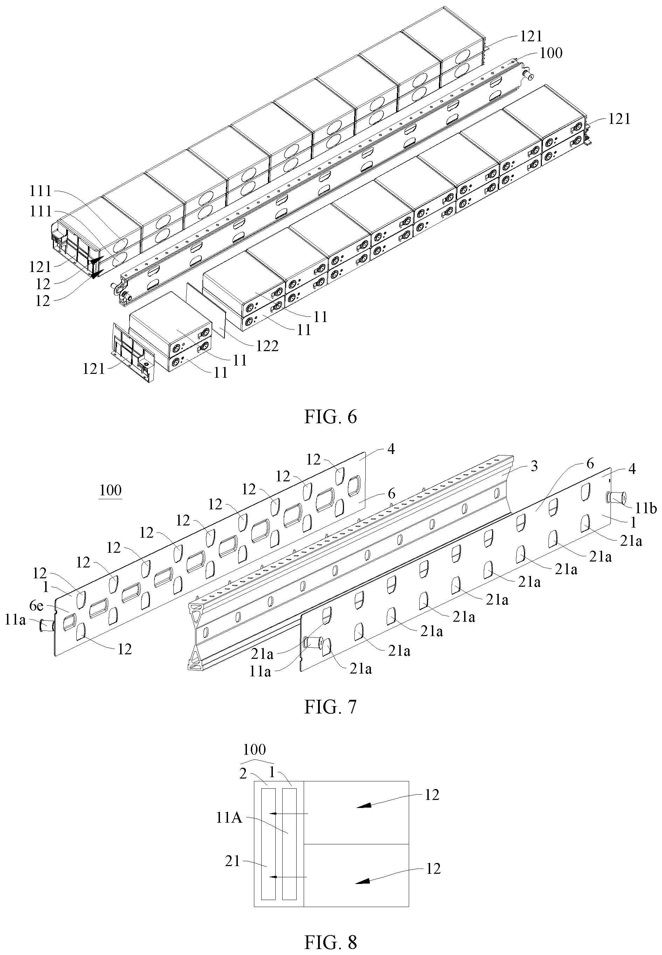

As shown in FIG. 3 and FIG. 7, the heat management component 100 includes a heat exchange portion 1 and a discharge portion 2. The heat exchange portion 1 is configured to exchange heat with a battery cell 11. For example, the heat exchange portion 1 exchanges heat with the battery cell 11 to take away heat of the battery cell 11, or the heat exchange portion 1 transfers heat to the battery cell 11 to preheat the battery cell 11 so that the battery cell 11 has a suitable operation temperature to ensure a service life of the battery cell 11. The discharge portion 2 is configured to receive an emission from the battery cell 11. Further, the discharge portion 2 may collect the emission from the battery cell 11 to realize storage or centralized discharging of the emission from the battery cell 11, thereby avoiding insulation failure caused by leakage of particles and the like in the emission from the battery cell 11 to other regions, such as an electrical connection region between two battery cells 11.

It can be understood that the discharge portion 2 may directly or indirectly receive the emission from the battery cell 11.

The discharge portion 2 is at least partially connected to the heat exchange portion 1 in a thermally conductive manner. In this way, heat exchange occurs between a part of the discharge portion 2 and the heat exchange portion 1, or the heat exchange occurs between the entire discharge portion 2 and the heat exchange portion 1. For example, the emission is an emission discharged from the battery cell 11 during thermal runaway of the battery cell 11. The emission is discharged through a discharge position of the battery cell 11 (for example, a pressure relief structure 111 is provided at the discharge position) and has a high temperature, and the heat exchange portion 1 exchanges heat with the discharge portion 2. In this way, the heat exchange portion 1 can dissipate the heat of the emission timely through the emission to prevent the heat from being accumulated near an eruption position of the battery cell 11 for a long time, thereby improving use safety of the battery cell 11. Further, the heat exchange portion 1 can also cool the emission to reduce a probability of the thermal runaway spreading of the battery cell 11, thereby further effectively improving safety of the battery cell 11 during its thermal runaway relief and discharge.

It can be understood that the discharge portion 2 is at least partially connected to the heat exchange portion 1 in a thermally conductive manner, which means that the discharge portion 2 is directly or indirectly connected to the heat exchange portion 1, so that the discharge portion 2 is at least partially kept relatively static with the heat exchange portion 1. Meanwhile, the discharge portion 2 at least partially exchanges heat with the heat exchange portion 1. In this way, the discharge portion 2 is at least partially in direct contact with the heat exchange portion 1 to realize heat exchange, or the discharge portion 2 is at least partially indirectly engaged with the heat exchange portion 1 through a heat conductive member to realize the heat exchange.

With the heat management component 100 according to the embodiments of the present disclosure, by integrating the discharge portion 2 with the heat exchange portion 1, the heat management component 100 has good maintainability. Moreover, it is beneficial to saving an occupied space of the heat management component 100. When the heat management component 100 is applied to the battery 300, a space utilization rate of the battery 300 can be improved. In addition, the heat exchange portion 1 can also exchange heat with at least part of the discharge portion 2 and dissipate the heat of the emission in time, thereby preventing the heat from being accumulated near the eruption position of the battery cell 11 for a long time. Meanwhile, the heat exchange portion 1 can also cool the emission to reduce the probability of thermal runaway spreading of the battery cell 11, thereby effectively improving the safety of the battery cell 11 during its thermal runaway relief and discharge. Therefore, safe and reliable use of the battery cell 11 can be ensured.

It can be understood that the discharge portion 2 may be only used for storing the emission from the battery cell 11, which may be for a case where less emission is discharged from the battery cell 11 and thus the emission does not substantially accumulate. For example, a discharge chamber 21 is defined by the heat management component 100, and the discharge chamber 21 is configured to receive the emission from the battery cell 11. Further, the discharge chamber 21 has no discharge outlet 11b. In other embodiments of the present disclosure, the discharge portion 2 may also discharge the emission after receiving the emission, which may be for a case where more emissions are discharged from the battery cell 11. For example, the discharge chamber 21 is defined by the heat management component 100, and the discharge chamber 21 is configured to receive the emission from the battery cell 11. Further, a discharge outlet 11b is formed on the discharge chamber 21, so that an emission in the discharge chamber 21 is discharged out of the discharge chamber 21 through the discharge outlet 11b.

In the present disclosure, the heat exchange portion 1 and the discharge portion 2 may be separate members. In this case, the heat exchange portion 1 and the discharge portion 2 are separately formed and may be assembled with each other through assembly means; or the heat exchange portion 1 and the discharge portion 2 may be formed into one piece. For example, the heat exchange portion 1 and the discharge portion 2 may be an integral extrusion part. Therefore, the heat management component 100 may be processed appropriately as desired.

In some embodiments, as shown in FIG. 1 and FIG. 7, the heat management component 100 is of an elongated shape. In this case, a length of the heat management component 100 (such as in an AA' direction in FIG. 1) is greater than a height of the heat management component 100 (such as in a CC' direction in FIG. 1), and the height of the heat management component 100 is greater than a thickness of the heat management component 100. Further, the heat exchange portion 1 and the discharge portion 2 are arranged in a thickness direction of the heat management component 100 (such as in a BB' direction in FIG. 1). In this way, the heat exchange portion 1 and the discharge portion 2 has a simple arrangement, which facilitates processing and manufacturing of the heat management component 100. Meanwhile, an area of each of wall surfaces at two sides of the heat management component 100 in a thickness direction of the heat management component 100 is greater than an area of each of the rest of wall surfaces of the heat management component 100, which is beneficial to an increase in an area of the heat exchange portion 1 for exchanging heat with the battery cell 11, thereby further ensuring an operation temperature of the battery cell 11. Meanwhile, it is beneficial to an increase in an area of the heat exchange portion 1 for exchanging heat with the discharge portion 2, and/or an increase in an area of the discharge portion 2 for exchanging heat with the heat exchange portion 1. In this way, a heat conductive area between the heat exchange portion 1 and the discharge portion 2 can be increased, thereby improving dissipating effect of the heat exchange portion 1 on the heat of the emission and a cooling effect of the heat exchange portion 1 on the emission.

It should be noted that, in the description of the present disclosure, the meaning of "and/or" is including three parallel solutions. Taking "A and/or B" as an example, including solution A, or solution B, or solutions A and B satisfied at the same time.

For example, in the example shown in FIG. 4 and FIG. 7, the heat management component 100 may have a beam structure. In this case, when the heat management component 100 is applied in the case assembly 200, structural strength and structural stability of the case assembly 200 can be enhanced.

In other embodiments of the present disclosure, the arrangement manner of the heat exchange portion 1 and the discharge portion 2 is not limited to the embodiments as described herein. In other embodiments, the heat exchange portion 1 and the discharge portion 2 are sequentially arranged in a width direction of the heat management component 100, and the present disclosure is not limited thereto.

In some embodiments, as shown in FIG. 3 to FIG. 7, in the thickness direction of the heat management component 100, the heat exchange portion 1 is disposed at an outer side of the discharge portion 2 in such a manner that the heat exchange portion 1 is located closer to a battery cell 11 arranged at an outer side of the heat management component 100 in the thickness direction of the heat management component 100 than the discharge portion 2. That is, the heat management component 100 and the battery cell 11 are arranged in the thickness direction of the heat management component 100, and the heat exchange portion 1 is located closer to the battery cell 11 than the discharge portion 2 in the thickness direction of the heat management component 100. As a result, a heat exchange effect of the heat exchange portion 1 on the battery cell 11 can be further improved. Moreover, in this case, the discharge portion 2 is located at a side of the heat exchange portion 1 facing away from the battery cell 11, so that the heat exchange portion 1 can still exchange heat with the discharge portion 2 while the heat exchange portion 1 can separate the battery cell 11 from the discharge portion 2. In this way, the heat exchange portion 1 can separate the battery cell 11 from the emission, to effectively prevent the heat of the emission from causing an adverse thermal effect on the battery cell 11, thereby ensuring the reliable use of the battery cell 11.

In another exemplary embodiment of the present disclosure, as shown in FIG. 7, FIG. 9 to FIG. 12, the heat exchange portion 1 is arranged at each of two sides of the discharge portion 2. That is, in the thickness direction of the heat management component 100, the heat exchange portion 1 is arranged at each of two opposite sides of the discharge portion 2, which facilitates performing heat exchange between the heat exchange portions 1 at the two sides of the discharge portion 2 and a same discharge portion 2. In this way, heat of the discharge portion 2 can be dissipated simultaneously through the heat exchange portions 1 at the two sides of the discharge portion 2. Therefore, dissipation of the heat of the emission in time can be further ensured, thereby further reduce the probability of thermal spreading.

It can be understood that when the heat exchange portion 1 is arranged at each of the two sides of the discharge portion 2, the battery cell 11 may be arranged at each of the two sides of the heat management component 100 in the thickness direction of the heat management component 100, each heat exchange portion 1 may separate the discharge portion 2 from the battery cell 11 at a side corresponding to the discharge portion 2, and the battery cells 11 at the two sides of the heat management component 100 may share one heat management component 100. In this way, a structure of an assembly formed by the heat management component 100 and the battery cell 11, such as a battery, can be simplified. Meanwhile, the battery cells 11 at the two sides of the heat management component 100 may also share one discharge portion 2, thereby facilitating further simplification of the structure.

In other embodiments of the present disclosure, the present disclosure is not limited to the embodiments as described herein. In other exemplary embodiments, in the thickness direction of the heat management component 100, the heat exchange portion 1 is disposed at one of the two opposite sides of the discharge portion 2. In this case, the battery cell 11 may be disposed at one of the two sides of the heat management component 100 in the thickness direction of the heat management component 100, and thus the heat exchange portion 1 is closer to the battery cell 11 than the discharge portion 2. However, the heat exchange portion 1 may still separate the discharge portion 2 from the battery cell 11.

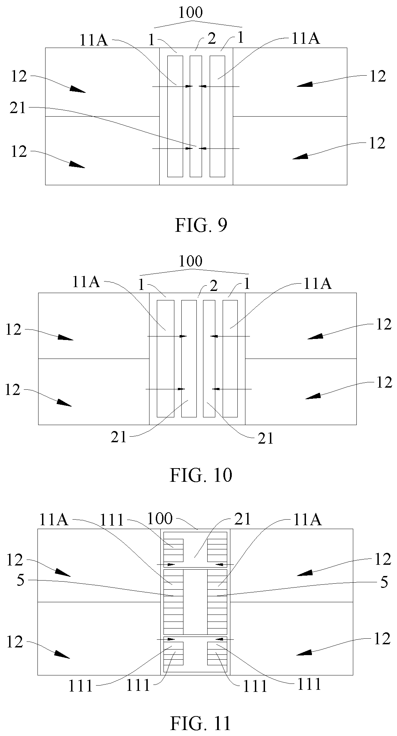

In some embodiments, as shown in FIG. 9, the discharge portion 2 includes one discharge chamber 21. The discharge chamber 21 is configured such that an emission in the discharge chamber 21 is adapted to exchange heat with the two heat exchange portions 1. In this way, the emission received in the discharge chamber 21 can exchange heat with the heat exchange portion 1 at one side of the discharge portion 2, and can also exchange heat with the heat exchange portion 1 at another side of the discharge portion 2, allowing the two heat exchange portions 1 to cool the emission in the discharge chamber 21 together. In this way, the cooling effect of the heat exchange portions 1 on the emission is effectively ensured, and the safety of the battery cell 11 during its relief and discharge is further improved.

In some embodiments, as shown in FIG. 10, the discharge portion 2 includes two discharge chambers 21. The two discharge chambers 21 are arranged in the thickness direction of the heat management component 100, and are configured to each exchange heat with the two heat exchange portions 1. Each of the two discharge chambers 21 is configured such that the emission in the discharge chamber 21 is adapted to exchange heat with the heat exchange portion 1 corresponding to the discharge chamber 21. That is, in the thickness direction of the heat management component 100, one of the discharge chambers 21 is located between one heat exchange portion 1 and another one of the discharge chambers 21, and an emission in the one of discharge chambers 21 exchanges heat with the one heat exchange portion 1. In addition, the other discharge chamber 21 is located between the one of the discharge chambers 21 and the other heat exchange portion 1, and an emission in the other discharge chamber 21 exchanges heat with the other heat exchange portion 1. In this way, each discharge chamber 21 exchanges heat with the heat exchange portion 1 corresponding to the discharge chamber 21, to ensure a cooling effect of each heat exchange portion 1 on the corresponding discharge chamber 21, thereby further improving the safety of the battery cell 11 during relief and discharge of the battery cell 11.

In another exemplary embodiment of the present disclosure, when the discharge chamber 21 is configured such that the emission in the discharge chamber 21 is adapted to exchange heat with the corresponding heat exchange portion 1, in a case where the heat exchange portion 1 has a heat exchange chamber 11, a heat exchange medium is provided in the heat exchange chamber 11, and the discharge chamber 21 is separated from the heat exchange chamber 11 by a heat conductive chamber wall, one side wall surface of the heat conductive chamber wall corresponds to a wall surface of the discharge chamber 21, and another side wall surface of the heat conductive chamber wall corresponds to a wall surface of the heat exchange chamber 11. As a result, the heat exchange effect between the heat exchange medium and the emission can be ensured.

In some embodiments, as shown in FIG. 7, the heat management component 100 includes a body 3 and a heat exchanger 4 disposed at least one side of the body 3 in a thickness direction of the body 3. The heat exchanger 4 is constructed as the heat exchange portion 1. The discharge portion 2 is constructed as by the body 3 alone, or the discharge portion 2 is defined by the body 3 and the heat exchanger 4 together. In this way, the heat management component 100 has a simple structure and can be easily processed and manufactured.

It can be understood that when the heat exchanger 4 is disposed at one of two sides of the body 3 in the thickness direction of the body 3, the battery cell 11 may be disposed at one side of the heat management component 100 where the heat exchanger 4 is correspondingly disposed. In this way, the heat exchange effect on the battery cell 11 can be ensured. In addition, when the heat exchanger 4 is disposed at each of the two sides of the body 3 in the thickness direction of the body 3, the battery cell 11 may be disposed at each of the two sides of the heat management component 100 in the thickness direction of the heat management component 100. In this way, the heat exchange effects of the battery cells 11 at the two sides of the heat management component 100 in the thickness direction of the heat management component 100 can be ensured simultaneously.

In some embodiments, as shown in FIG. 7, FIG. 20, and FIG. 21, a discharge chamber 21 is defined by the discharge portion 2, and the heat exchanger 4 has a first discharge path 12 extending to the discharge chamber 21. The first path 12 is adapted to be in communication with the discharge chamber 21. Further, the discharge chamber 21 is adapted to receive the emission from the battery cell 11 through the first discharge path 12. In this way, the emission from the battery cell 11 is indirectly discharged to the discharge chamber 21 through the first discharge path 12. Therefore, it can be ensured that the emission is received smoothly.

In another exemplary embodiment of the present disclosure, the first discharge path 12 may be a communication opening formed at the heat exchanger 4, and a discharge channel is defined by the communication opening; or the first discharge path 12 may also be an avoidance opening formed at the heat exchanger 4; or the first discharge path 12 may also be a weakened region formed at the heat exchanger 4. When the emission is discharged from the battery cell 11, the emission may break through the weakened region to be discharged into the discharge chamber 21. Further, the first discharge path 12 of the heat exchanger 4 is arranged to avoid a part of the battery cell 11 for heat exchange.

In other embodiments of the present disclosure, the discharge chamber 21 may be further adapted to directly receive the emission from the battery cell 11. For example, the heat exchanger 4 includes a plurality of heat sub-exchangers arranged at intervals, and an inlet region 21a of the discharge portion 2 is located between two adjacent heat exchange sub-exchangers. In other embodiments, the discharge chamber 21 may also indirectly receive the emission from the battery cell 11 through other members.

In some embodiments, as shown in FIG. 7, the heat exchanger 4 is arranged at each of two sides of the body 3 in the thickness direction of the body 3, and a heat exchange chamber 11A is defined by the heat exchanger 4. The heat exchange chamber 11A has an inlet 11a and an outlet 11b to allow a heat exchange medium to flow to the heat exchange chamber 11A through the inlet 11a and flow out of the heat exchange chamber 11A through the outlet 11b. In this way, the two heat exchangers 4 may exchange heat with one body 3 to ensure a cooling effect on the body 3.

The heat exchange chambers 11A at the two sides of the body 3 in the thickness direction of the body 3 are connected in series or parallel. For example, in the case where the heat exchange chambers 11A at the two sides of the body 3 in the thickness direction of the body 3 are connected in series, the heat exchange medium first flows through one of heat exchange chambers 11A for heat exchange, and then flows through another one of heat exchange chambers 11A for heat exchange. For another example, in the case where the heat exchange chambers 11A at the two sides of the body 3 in the thickness direction of the body 3 are connected in parallel, the heat exchange medium is distributed into the heat exchange chambers 11A at the two sides of the body 3 for heat exchange.

In some embodiments, a discharge chamber 21 is defined by the discharge portion 2. The discharge portion 2 has inlet regions 21a at two opposite sides of the discharge portion 2. The inlet regions 21a are in communication with the discharge chamber 21. The discharge chamber 21 is adapted to receive the emission from the battery cell 11 through the inlet regions 21a. The inlet regions 21a at the two opposite sides of the discharge portion 2 are offset from each other in a length direction of the heat management component 100. Further, orthographic projections of the inlet regions 21a at the two opposite sides of the discharge portion 2 at least partially do not overlap with each other in the thickness direction of the heat management component 100. In this way, it is beneficial to avoid the occurrence of eruptions facing towards each other when the corresponding battery cells 11 at the two sides of the heat management component 100 discharges the emission, to further reduce the probability of thermal spreading.

In another exemplary embodiment of the present disclosure, each of the inlet regions 21a may be a discharge inlet formed at the discharge portion 2 or a weakened region formed at the discharge portion 2, which can both ensure that the emission from the battery cell 11 during pressure relief of the battery cell 11 is discharged into the discharge chamber 21 through the inlet region 21a.

In some embodiments, as shown in FIG. 7, the heat management component 100 includes a body 3 and heat exchangers 4 arranged at two sides of the body 3 in a thickness direction of the body 3. The heat exchanger 4 is constructed as the heat exchange portion 1.

The discharge portion 2 is constructed by the body 3 alone and the inlet 11a is formed at the body 3, or the discharge portion 2 is defined by the body 3 and the heat exchanger 4 together and the inlet 11a is formed at the heat exchanger 4. Therefore, the heat management component 100 is flexible and convenient in manufacturing.

It can be understood that the body 3 and the heat exchanger 4 may be formed separately or integrally.

In some embodiments, as shown in FIG. 7 to FIG. 12, a heat exchange chamber 11A is defined by the heat exchange portion 1. The heat exchange chamber 11A is adapted to accommodate a heat exchange medium. The heat exchange medium can exchange heat with the battery cell 11 and with the discharge portion 2 to at least utilize sensible heat of the heat exchange medium to meet the heat demand of the battery cell 11 and the heat demand of the discharge portion 2.

In other embodiments of the present disclosure, the structure of the heat exchange portion 1 is not limited to the embodiments as described herein. For example, the heat exchange chamber 11A is defined by the heat exchange portion 1 and the discharge portion 2 together. For another example, the heat exchange chamber 11A is defined by the heat exchange portion 1, the discharge portion 2, and other portions of the heat management component 100 together. For another example, no heat exchange chamber 11A is formed in the heat exchange portion 1, and no heat exchange chamber 11A is formed between the heat exchange portion 1 and the discharge portion 2. The heat exchange portion 1 may be a refrigeration member such as a semiconductor refrigeration member.

In some embodiments, as shown in FIG. 7, the heat exchange portion 1 has an inlet 11a and an outlet 11b. Each of the inlet 11a and the outlet 11b is in communication with the heat exchange chamber 11A to allow the heat exchange medium to flow into the heat exchange chamber 11A through the inlet 11a and flow out of the heat exchange chamber 11A through the outlet 11b. It can be seen that the heat exchange medium may flow in the heat exchange chamber 11A, and the heat exchange medium may continuously exchange heat with the discharge portion 2 and the battery cell 11 by means of its fluidity, to take away heat accumulated in the discharge portion 2, thereby lowering a probability of heat concentration and improving the safety. For example, when the heat management component 100 is applied to the battery 300, a probability of heat concentration in the case assembly 200 of the battery 300 can be lowered, thereby improving the safety of the battery 300.

A position of the inlet 11a and a position of the outlet 11b may be set as desired. For example, the heat exchange portion 1 may be of an elongated shape, the inlet 11a is located at one end of the heat exchange portion 1 in a length direction of the heat exchange portion 1, and the outlet 11b is located at another end of the heat exchange portion 1 in the length direction of the heat exchange portion 1. In this way, a length of the heat exchange path of the heat exchange chamber 11A can be ensured.

In another exemplary embodiment of the present disclosure, the heat exchange medium includes a gas, a liquid, or a gas-liquid mixture. For example, the heat exchange medium includes water, or a refrigerant, but the present disclosure is not limited to the embodiments as described herein.

In some embodiments, as shown in FIG. 11, the heat exchange chamber 11A includes a plurality of heat exchange sub-chambers 111, which is beneficial to an increase in a contact area between the heat exchange portion 1 and the heat exchange medium, thereby enhancing a heat exchange effect of the heat exchange portion 1 on the battery cell 11 and the discharge portion 2.

In some embodiments, as shown in FIG. 11, the heat exchange portion 1 has an inlet 11a and an outlet 11b. Each of the inlet 11a and the outlet 11b is in communication with the heat exchange chamber 11A, and thus each of the plurality of heat exchange sub-chambers 111 is in communication with the inlet 11a and the outlet 11b. In this way, the plurality of heat exchange sub-chambers 111 is arranged in parallel. The heat exchange medium at the inlet 11a is distributed into the plurality of heat exchange sub-chambers 111, and the heat exchange medium in each heat exchange sub-chamber 111 flows out of the heat exchange sub-chamber 111 through the outlet 11b. Therefore, a heat exchange effect of each heat exchange sub-chamber 111 can be ensured.

In other embodiments of the present disclosure, the plurality of heat exchange sub-chambers 111 may also be arranged in series, or at least two of the plurality of heat exchange sub-chambers 111 are arranged in series, and at least two of the plurality of heat exchange sub-chambers 111 are arranged in parallel.

In some embodiments, as shown in FIG. 11, a first heat conductive member 5 is disposed in the heat exchange chamber 11A. In this way, it is beneficial to an increase in the contact area between the heat exchange portion 1 and the heat exchange medium. Therefore, the heat exchange effect of the heat exchange portion 1 on the battery cell 11 and the discharge portion 2 can be enhanced while increasing a structural strength of the heat exchange chamber 11A.

In another exemplary embodiment of the present disclosure, the first heat conductive member 5 is made of metal. In other embodiments of the present disclosure, the first heat conductive member 5 may be made of other materials, and the present disclosure is not limited thereto.

In another exemplary embodiment of the present disclosure, in the example of FIG. 11, the heat exchange chamber 11A is divided into a plurality of heat exchange sub-chambers 111 by the first heat conductive member 5.

It can be understood that the plurality of heat exchange sub-chambers 111 divided by the first heat conductive member 5 may be arranged in series and/or in parallel, and the present disclosure is not limited thereto. For example, the first heat conductive member 5 is formed as a flow guide rib.

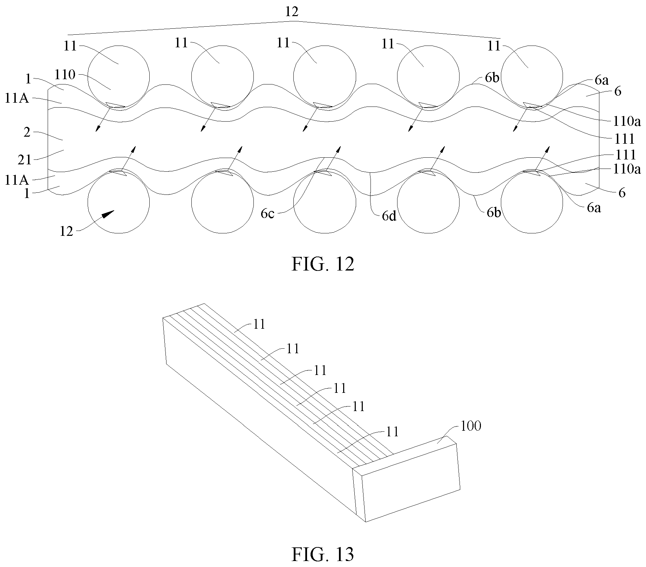

In some embodiments, as shown in FIG. 7 and FIG. 12, the heat management component 100 includes two outer side plates 6 arranged opposite to each other. The two outer side plates 6 may be arranged opposite to each other in a thickness direction of the outer side plate 6. At least one of the two outer side plates 6 is constructed as the heat exchange portion 1, and the battery cell 11 is adapted to be arranged at an outer side of the outer side plate 6 in the thickness direction of the outer side plate 6. In this way, the outer side plate 6 is located close to the battery cell 11 to ensure a heat exchange effect of the outer side plate 6 on the battery cell 11.

In some embodiments, as shown in FIG. 12, the outer side plate 6 is adapted to exchange heat with a cylindrical battery 110. Further, the outer side plate 6 has a first groove 6a formed at an outer side wall of the outer side plate 6 to receive at least part of the cylindrical battery 110. In this way, it is beneficial to an increase in a heat exchange area between the outer side plate 6 and the cylindrical battery 110. Meanwhile, an occupied space of the battery cell 11 and an occupied space of the heat management component 100 in the thickness direction of the heat management component 100 can be saved, thereby improving the space utilization rate of the battery 300.

In another exemplary embodiment of the present disclosure, the first groove 6a has a curved groove surface, so that the groove surface of the first groove 6a follows an outer peripheral wall of the cylindrical battery 110. Therefore, it is beneficial to an increase in a heat exchange area between a wall surface of the first groove 6a and the cylindrical battery 110, thereby enhancing a heat exchange effect of the heat exchange portion 1 on the cylindrical battery 110. For example, the first groove 6a has an arc groove surface, such as a circular arc surface.

In some embodiments, as shown in FIG. 12, the outer side wall of the outer side plate 6 has a plurality of first protrusions 6b. The first groove 6a is defined between two adjacent first protrusions 6b. In this way, the outer side wall of the outer side plate 6 extends substantially into a wave shape in the length direction of the outer side plate 6, to further increase the heat exchange area of the outer side plate 6. Therefore, it is beneficial to an increase in the heat exchange effect of the outer side plate 6 on the battery cell 11.

It can be understood that the outer side wall of the outer side plate 6 refers to a side surface of the outer side plate 6 facing towards the battery cell 11, and an inner side wall of the outer side plate 6 refers to a side surface of the outer side plate 6 facing away from the battery cell 11.

In some embodiments, as shown in FIG. 12, the outer side plate 6 is provided with a plurality of second protrusions 6d at the inner side wall of the outer side plate 6. A second groove 6c is defined between two adjacent second protrusions 6d. The plurality of second protrusions 6d is opposite to the plurality of first protrusions 6b in a thickness direction of the heat exchange portion 1, and the second groove 6c is opposite to the first groove 6a in the thickness direction of the heat exchange portion 1. In this case, the inner side wall of the outer side wall 6 also extends substantially into a wave shape in the length direction of the outer side wall 6, to further improve the heat exchange area of the heat exchange portion 1.

In some embodiments, as shown in FIG. 2, the outer side plate 6 has a planar outer side wall. In this way, the outer side plate 6 can provide a good flat surface for the arrangement of the battery cells 11, thereby facilitating a regular arrangement of the battery cell 11. Meanwhile, processing of the outer side plate 6 is facilitated.

In some embodiments, as shown in FIG. 7, the outer side plate 6 is provided with a projection 6e at an inner wall surface of the outer side plate 6, and a heat exchange chamber 11A is formed at a position corresponding to the projection 6e. In this way, it can be ensured that the outer side plate 6 has good heat exchange efficiency while facilitating the forming of the heat exchange chamber 11A. Moreover, the heat exchange chamber 11A does not interfere with the battery cell 11.

In some embodiments, as shown in FIG. 7, the outer side plate 6 has an inlet region 21a, and the discharge chamber 21 is adapted to receive the emission from the battery cell 11 through the inlet region 21a. Further, the outer side plate 6 has an insulator. The insulator is disposed at an outer peripheral region of the inlet region 21a to realize an insulation between the battery cell 11 and the heat management component 100. In this way, when the battery cell 11 discharges the emission, the battery cell 11 and the heat management component 100 are electrically connected to each other by particles in the emission, which results in insulation failure. As a result, safe use of the battery cell 11 can be further ensured.

In some embodiments, a second heat conductive member is disposed between the heat exchange portion 1 and the discharge portion 2 to ensure heat exchange efficiency between the heat exchange portion 1 and the discharge portion 2, thereby ensuring the cooling effect of the heat exchange portion 1 on the emission.

In another exemplary embodiment of the present disclosure, the second heat conductive member is a heat conductive adhesive, a heat conductive plate, or the like. The heat conductive plate may be made of a material of a suitable thermal conductivity as desired. For example, the second heat conductive member is made of metal.

It can be understood that when the heat exchange portion 1 and the discharge portion 2 are integrally formed, the second heat conductive member between the heat exchange portion 1 and the discharge portion 2 may be formed as a heat conductive wall, and the heat exchange chamber 11A of the heat exchange portion 1 and the discharge chamber 21 of the discharge portion 2 may be located two opposite sides of the heat conductive wall, respectively.

A case assembly 200 according to an embodiment of a second aspect of the present disclosure is provided. The case assembly 200 defines an accommodation cavity 70a for accommodating a battery cell 11. The case assembly 200 includes the heat management component 100 according to the above embodiments of first aspect of the present disclosure.

With the case assembly 200 according to the embodiments of the present disclosure, by using the above heat management component 100, an improvement in a utilization rate of a space in the case assembly 200 is facilitated, and the use safety of the battery cell 11 is ensured.

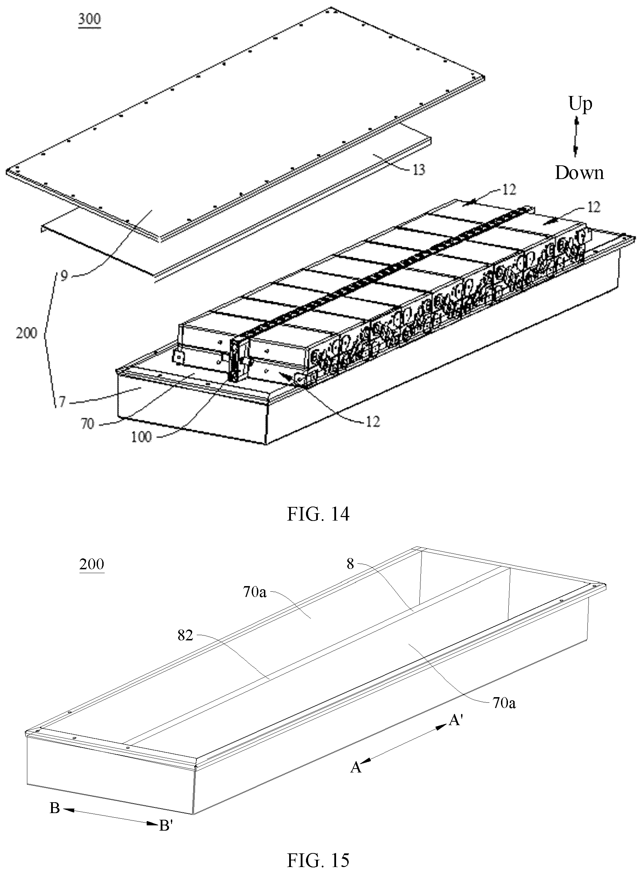

In some embodiments, as shown in FIG. 14, FIG. 18, and FIG. 19, the case assembly 200 includes a side wall plate 7 and a partition beam 8. The partition beam 8 is located in a space 70 enclosed by the side wall plate 7 to divide the space 70 into a plurality of accommodation cavities 70a. The side wall plate 7 is provided with the battery cell 11 at a side of the side wall plate 7 in a thickness direction of the side wall plate 7. Further, the partition beam 8 is provided with the battery cell 11 at each of two sides of the partition beam 8 in a thickness direction of the partition beam 8. At least one of the side wall plate 7 and the partition beam 8 is constructed as the heat management component 100. In this way, the heat management component 100 may correspond to the battery cells 11 in one accommodation cavity 70a or the battery cells 11 in the plurality of accommodation cavities 70a. That is, the heat management component 100 can exchanges heat with at least part of the battery cells 11 in one accommodation cavity 70a or at least part of the battery cells 11 in the plurality of accommodation cavities 70a.

It can be seen that the partition beam 8 can divide the space 70 into the plurality of accommodation cavities 70a, and can also enhance a structural strength of the case assembly 200. When the partition beam 8 is constructed as the heat management component 100, multiple use of the one heat management component 100 can be further achieved. In this way, an appropriate reduction in the number of beam structures of the case assembly 200 is facilitated while ensuring the structural strength of the case assembly 200. Therefore, the utilization rate of the space 70 of the case assembly 200 can be improved, and thus each component in the case assembly 200 has more compact structure, which is beneficial to an improvement in energy density of the battery 300.

It can be understood that when the case assembly 200 includes the side wall plate 7 and the partition beam 8, the side wall plate 7 may be constructed as the heat management component 100 and the partition beam 8 may not the heat management component 100, or the partition beam 8 may be constructed as the heat management component 100 and the side wall plate 7 may not be the heat management component 100, both the side wall plate 7 and the partition beam 8 may be constructed as the heat management component 100.

In another exemplary embodiment of the present disclosure, two ends of the partition beam 8 in a length direction of the partition beam 8 are respectively fixedly connected to corresponding side wall plates 7, or the case assembly 200 further includes a top cover 9, and the partition beam 8 is fixedly connected to the top cover 9, or the case assembly 200 further includes a bottom plate 10, and the partition beam 8 is fixedly connected to the bottom plate 10, or the case assembly 200 further includes a top cover 9 and a bottom plate 10, and the partition beam 8 is fixedly connected to at least one of the top cover 9 and the bottom plate 10.

It can be understood that, when the partition beam 8 is constructed as the heat management component 100, in a case where the heat exchange chamber 11A is defined by the heat management component 100 and has an inlet 11a and an outlet 11b to allow the heat exchange medium to flow to the heat exchange chamber 11A through the inlet 11a and flow out of the heat exchange chamber 11A through the outlet 11b, different heat exchange paths or different heat management loops may be designed according to different members fixedly connected to the partition beam 8, to realize circulation flow of the heat exchange medium along the heat exchange path. Likewise, when the partition beam 8 is constructed as the heat management component 100, in a case where the discharge chamber 21 is defined by the heat management component 100 and has an inlet 11a and an outlet 11b to receive the emission and allow the emission to flow to the discharge chamber 21 through the inlet 11a and flow out of the discharge chamber 21 through the outlet 11b, different discharge paths may be designed according to different members fixedly connected to the partition beam 8, to realize smooth discharge of the emission.

In some embodiments, as shown in FIG. 14 and FIG. 15, the partition beam 8 includes a longitudinal beam 82 extending in a length direction of the case assembly 200. The longitudinal beam 82 is constructed as the heat management component 100. The battery cell 11 is disposed at each of two sides of the longitudinal beam 82 in a thickness direction of the longitudinal beam 82.

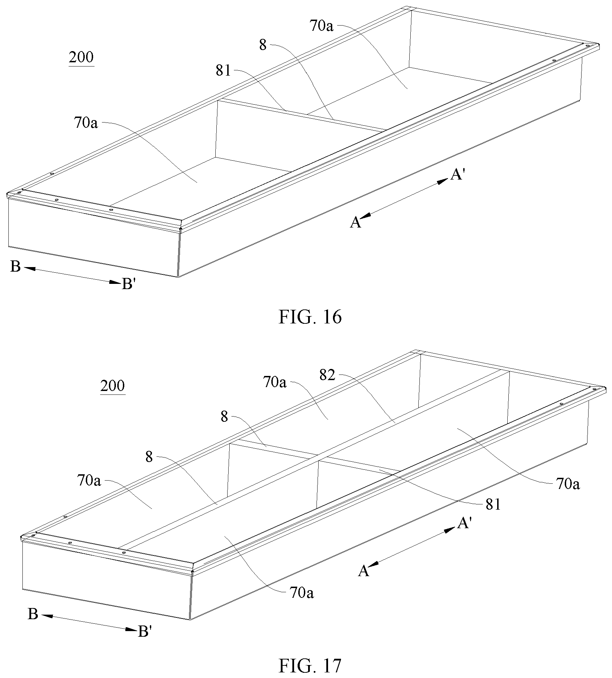

In some embodiments, as shown in FIG. 16, the partition beam 8 includes a transverse beam 81 extending in a width direction of the case assembly 200. The transverse beam 81 is constructed as the heat management component 100. The battery cell 11 is disposed at each of two sides of the transverse beam 81 in a thickness direction of the transverse beam 81.

In some embodiments, as shown in FIG. 17, the partition beam 8 includes a longitudinal beam 82 and a transverse beam 81. The longitudinal beam 82 extends in the length direction of the case assembly 200, and the transverse beam 81 extends in the width direction of the case assembly 200. At least one of the longitudinal beam 82 and the transverse beam 81 is constructed as the heat management component 100.

Therefore, the heat management component 100 may be formed as the transverse beam 81 and/or the longitudinal beam 82 of the case assembly 200, which can realize a flexible arrangement of the case assembly 200, thereby better meet a heat exchange demands of the battery cell 11.

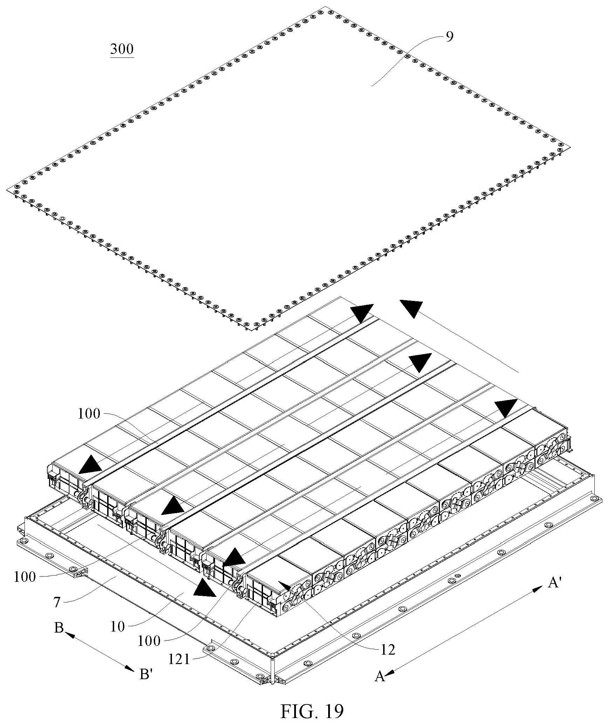

In some embodiments, as shown in FIG. 19, the partition beam 8 is constructed as the heat management component 100, and the side wall plate 7 has a second discharge path in communication with a discharge chamber 21 of the discharge portion 2. The emission from the battery cell 11 may flow to the second discharge path through the discharge chamber 21, to facilitate final discharge of the emission, especially in a case where there are many emissions from the battery cell 11. Therefore, concentrated aggregation of the emission can be avoided, thereby ensuring smooth pressure relief of the battery cell 11.

For example, the two ends of the partition beam 8 in the length direction of the partition beam 8 are fixedly connected to the corresponding side wall plates 7, respectively. The discharge chamber 21 penetrates one of the two ends of the partition beam 8 in the length direction of the partition beam 8, and the side wall plate 7 at least corresponding to one of the two ends of the partition beam 8 has a second discharge path in communication with the discharge chamber 21, or the discharge chamber 21 penetrates each of the two ends of the partition beam 8 in the length direction of the partition beam 8, and the side wall plates 7 at the two ends of the partition beam 8 in the length direction of the partition beam 8 each have a second discharge path in communication with the discharge chamber 21.

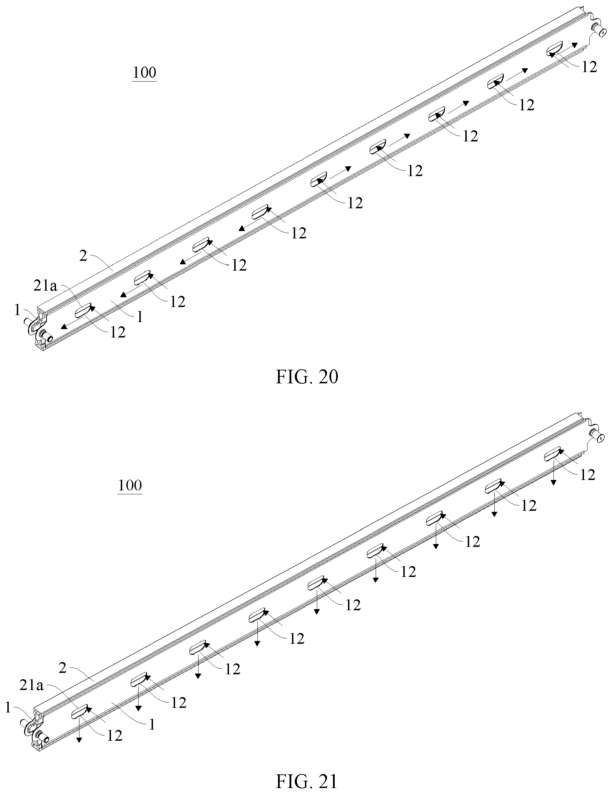

In other embodiments, as shown in FIG. 21, when the partition beam 8 is constructed as the heat management component 100, the case assembly 200 includes a bottom plate 10. An exhaust opening is formed at a side of the partition beam 8 facing towards the bottom plate 10 and is in communication with the discharge chamber 21. The bottom plate 10 has a second discharge path in communication with the exhaust opening, and the second discharge path is in communication with the discharge chamber 21.

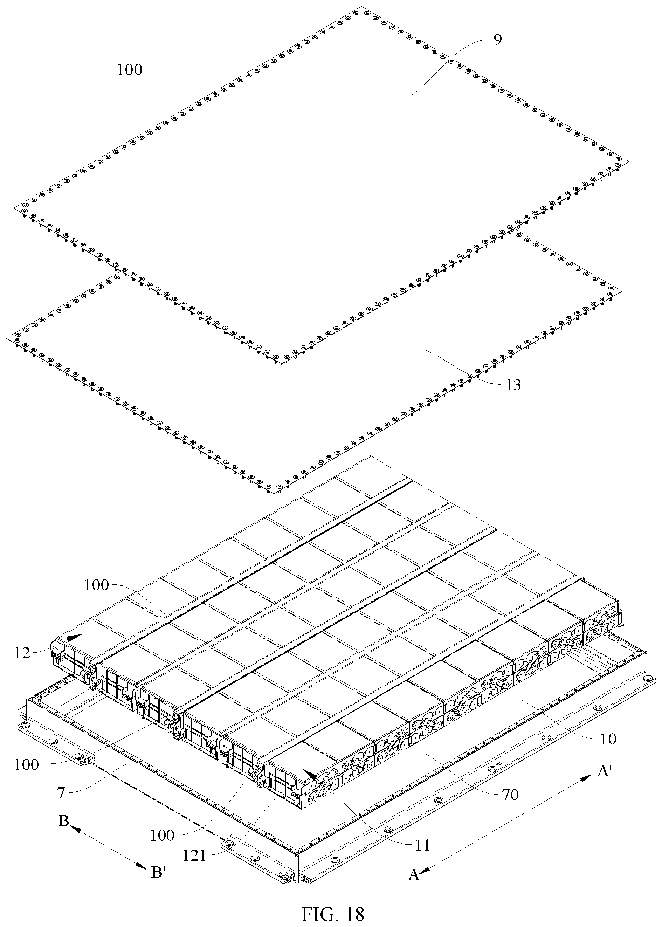

In some embodiments, as shown in FIG. 18, the case assembly 200 includes a top cover 9. The heat management component 100 is disposed at the top cover 9. The top cover 9 may be covered at a top side of the accommodation cavity 70a. The top cover 9 can apply a predetermined force to the heat management component 100 to ensure stable installation of the heat management component 100. For example, the heat management component 100 may be fixedly connected to the top cover 9, for example by a threaded fastener. In other embodiments of the present disclosure, the heat management component 100 may also directly or indirectly abut with the top cover 9.

In some embodiments, as shown in FIG. 18, the case assembly 200 includes a bottom plate 10. The heat management component 100 is disposed at the bottom plate 10. The bottom plate 10 may be disposed at a lower side of the accommodation cavity 70a, so that the battery cell 11 is supported by the bottom plate 10 directly or indirectly. The bottom plate 10 may apply a predetermined force to the heat management component 100 to ensure the stable installation of the heat management component 100. For example, the heat management component 100 may be fixedly connected to the bottom plate 10, for example by a threaded fastener. In other embodiments of the present disclosure, the heat management component 100 may also directly or indirectly abut with the bottom plate 10.

In some embodiments, as shown in FIG. 18, the case assembly 200 includes a top cover 9 and a bottom plate 10, and the heat management component 100 is disposed on at least one of the top cover 9 and the bottom plate 10 to ensure the stable installation of the heat management component 100.

In other embodiments of the present disclosure, the heat management component 100 may not be connected to the top cover 9 and the bottom plate 10.

A battery 300 according to an embodiment of a third aspect of the present disclosure includes the case assembly 200 according to the above embodiments of the second aspect of the present disclosure and a battery cell 11. The battery cell 11 is arranged in the accommodation cavity 70a. The heat exchange portion 1 is disposed at a side of the heat management component 100 facing towards the battery cell 11, to reduce a distance between the heat exchange portion 1 and the battery cell 11, thereby ensuring a heat exchange effect between the heat exchange portion 1 and the battery cell 11.

With the battery 300 according to the embodiments of the present disclosure, by using the above case assembly 200, the improvement of the space utilization rate is facilitated, thereby improving the use safety and reliability of the battery 300.

In some embodiments, as shown in FIG. 3, FIG. 7, FIG. 14, FIG. 18, and FIG. 19 to FIG. 21, a cell row 12 is disposed on at least one side of the heat management component 100 in a thickness direction of the heat management component 100. The cell row 12 includes a plurality of battery cells 11 sequentially arranged in a length direction of the heat management component 100, and each of the plurality of battery cells 11 is adapted to discharge the emission to the discharge portion 2 independently. In this way, it is convenient for discharge of the emission from the plurality of battery cells 11 not to interfere with each other. For example, one of the battery cells 11 may discharge the emission to the discharge portion 2, which does not affect whether the battery cells 11 adjacent to the one of the battery cells 11 discharge the emission to the discharge portion 2. Therefore, it is beneficial to a further decrease in the probability of thermal spreading of the cell row 12 and the improvement of the use safety of the battery 300.

For example, when the cell row 12 is disposed at a side of the heat management component 100 in the thickness direction of the heat management component 100, the plurality of battery cells 11 of the cell row 12 may share one heat management component 100. That is, the heat management component 100 may exchange heat with the plurality of battery cells 11. In addition, when the cell rows 12 are disposed at two sides of the heat management component 100 in the thickness direction of the heat management component 100, the cell rows 12 at the two sides of the heat management component 100 in the thickness direction of the heat management component 100 may share one heat management component 100. That is, the heat management component 100 may exchange heat with the cell rows 12 at the two sides of the heat management component 100.

It can be understood that the battery cell 11 may directly or indirectly discharge the emission to the discharge portion 2.

In another exemplary embodiment of the present disclosure, in the example of FIG. 6, an end plate 121 is disposed at each of two ends of the cell row 12 in a length direction of the cell row 12 to limit a movement of the entire cell row 12 in the length direction. In other embodiments of the present disclosure, when the plurality of cell rows 12 is sequentially arranged in the height direction of the heat management component 100, one end of the plurality of cell rows 12 in the length direction of the cell row 12 may share one end plate 121.

In the example shown in FIG. 6, the cell row 12 includes a plurality of battery cells 11, and a heat insulation member 122 is disposed between two adjacent battery cells 11.

In some embodiments, as shown in FIG. 3, FIG. 14, FIG. 18, and FIG. 19, the discharge portion 2 is provided with a plurality of cell rows 12 at least one side of the discharge portion 2 in a thickness direction of the discharge portion 2. The plurality of cell rows 12 at one side of the discharge portion 2 in the thickness direction of the discharge portion 2 is sequentially arranged in the height direction of the discharge portion 2. Moreover, two cell rows 12 of plurality of cell rows 12 the at the one side of the discharge portion 2 in the thickness direction of the discharge portion 2 are aligned with or offset from each other in the length direction of the discharge portion 2. In this way, a flexible arrangement of the cell rows 12 can be realized

For example, when the plurality of cell rows 12 is disposed at one side of the heat management component 100 in the thickness direction of the heat management component 100, the plurality of cell rows 12 may share one heat management component 100. That is, the heat management component 100 may exchange heat with the battery cells 11 of the plurality of cell rows 12. When the plurality of cell rows 12 is disposed at the two sides of the heat management component 100 in the thickness direction of the heat management component 100, the number of the cell rows 12 at the two sides of the heat management component 100 in the thickness direction of the heat management component 100 may be the same as or different from each other.

In other embodiments of the present disclosure, one cell row 12 may be disposed at any one of the two sides of the discharge portion 2 in the thickness direction of the discharge portion 2. For example, one cell row 12 may be disposed at the two sides of the discharge portion 2 in the thickness direction of the discharge portion 2; or one cell row 12 may be disposed at one of the two sides of the discharge portion 2 in the thickness direction of the discharge portion 2, and a plurality of cell rows 12 is disposed at another one of the two sides of the discharge portion 2 in the thickness direction of the discharge portion 2.

In some embodiments, as shown in FIG. 3, FIG. 14, FIG. 18, and FIG. 19, a thickness direction of the battery cell 11 is the same as a height direction of the heat management component 100. In addition, a thickness of the battery cell 11 is smaller than a length and width of the battery cell 11. In this way, when the height direction of the heat management component 100 refers to an up-down direction, the battery cell 11 is arranged horizontally. In this way, a height of a center of gravity of the battery cell 11 can be lowered, and a splashing coverage of the battery cell 1 can be reduced.

It can be understood that the lower the height of the center of gravity of the battery cell 11, the lower a splashing height of the battery cell 11 during its pressure relief. In this way, an influence of the splashing of the battery cell 11 in the up-down direction can be reduced. Meanwhile, a distance at which the battery cell 11 can splash also becomes smaller, which is beneficial to an improvement in safety performance. For example, in a case where the emission is discharged through the pressure relief structure 111 during the pressure relief of the battery cell 11, since the battery cell 11 is arranged horizontally, a height of the pressure relief structure 111 can be reduced, which can effectively reduce a height of an eruption position of the pressure relief structure 111, thereby reducing a diffusion region and a splashing region. Therefore, overall safety performance of the battery can be enhanced.

For example, in the examples shown in FIG. 3, FIG. 14, FIG. 18, and FIG. 19, the battery cell 11 is formed as a hexahedron structure. Taking the battery cell 11 of a cuboid shape as an example, a length of the battery cell 11 is greater than a width of the battery cell 11, and the width of the battery cell 11 is greater than a thickness of the battery cell 11. In this case, when the battery cell 11 is arranged horizontally, two large surfaces of the battery cell 11 are arranged opposite to each other in the up-down direction, and areas of the two large surfaces of the battery cell 11 are greater than areas of the rest surfaces of the battery cell 11. In this case, a surface of the battery cell 11 for exchanging heat with the heat management component 100 is not the large surfaces of the battery cell 11. Compared with a case where the large surfaces of the battery cell 11 exchanges heat with the heat management component 100, in the present disclosure, an arrangement of the battery cell 11 and the heat management component 100 can allow one heat management component 100 to exchange heat with more battery cells 11 simultaneously. As a result, the number of heat management components 100 to be arranged in the battery 300 can be reduced, thereby simplifying the structure of the battery 300.

In some embodiments, as shown in FIG. 3, FIG. 14, FIG. 18, and FIG. 19, the number of the cell rows 12 at one side of the discharge portion 2 in the thickness direction of the discharge portion 2 is smaller than the number of the battery cells 11 of each of the cell rows 12 at the one side of the discharge portion 2 in the thickness direction of the discharge portion 2, and/or the number of the cell rows 12 at one side of the discharge portion 2 in the thickness direction of the discharge portion 2 ranges from 1 to 3 including 1 and 3. That is, one, two, or three cell rows 12 at one side of the discharge portion 2 in the thickness direction of the discharge portion 2 are provided. Therefore, it is convenient to reduce a compression force borne by the cell row 12 while ensuring the arrangement of cell row 12, thereby lowering the influence of the compression force on an intensity degree of the battery cell 11 during pressure relief and emission discharge of the battery cell 11.

It can be understood that when the plurality of cell rows 12 at one side of the discharge portion 2 in the thickness direction of the discharge portion 2 is provided, the plurality of cell rows 12 is sequentially arranged in the height direction of the discharge portion 2.

In some embodiments, as shown in FIG. 14, FIG. 18, and FIG. 19, the number of the cell rows 12 at one side of the discharge portion 2 in the thickness direction of the discharge portion 2 is smaller than the number of cell rows 12 of the battery 300 in the thickness direction of the discharge portion 2. Similarly, the compression force borne by the cell row 12 can also be reduced.

In some embodiments, as shown in FIG. 14, the battery 300 further includes a fixing member 13. The fixing member 13 is disposed at a side of the cell row 12 in a thickness direction of the cell row 12 and abuts with the cell row 12 at an outermost side. In this way, the fixing member 13 abuts with large surfaces of all the battery cells 11 at the outermost side, to apply a predetermined binding force to all the battery cells 11 of the battery 300, thereby ensuring stable performance of the battery cell 11 after expansion deformation. The fixing member 13 is fixedly connected to the case assembly 200, to facilitate reliable mounting of the fixing member 13. For example, the fixing member 13 is fixedly connected to the outer side plate 7 of the case assembly 200.

For example, in the example of FIG. 14, the fixing member 13 is disposed at a top side of all the cell rows 12 and directly or indirectly abuts with all the cell rows 12 at an uppermost side. When the battery cells 11 expand, the fixing member 13 deforms and swells upwards in such a manner that the fixing member 13 applies a downward force to the battery cell 11 at least when the battery cells 11 expand and deform.

In another exemplary embodiment of the present disclosure, the fixing member 13 is formed as a plate-shaped structure, to simplify a structure of the fixing member 13. In other embodiments of the present disclosure, the fixing member 13 may also be of a grating structure, a net structure, and the like.

In some embodiments, as shown in FIG. 3, FIG. 14, FIG. 18, and FIG. 19, the cell row 12 is arranged at each of the two sides of the heat management component 100 in the thickness direction of the heat management component 100. In this way, the cell rows 12 at the two sides of the heat management component 100 in the thickness direction of the heat management component 100 share one heat management component 100, to facilitate a reduction in the number of heat management components 100 to be arranged in the battery 300.

It can be understood that one or more cell rows 12 at one side of the heat management component 100 in the thickness direction of the heat management component 100 may be provided, and the number of cell rows 12 at the two sides of the heat management component 100 in the thickness direction of the heat management component 100 may be the same as or different from each other.

In other embodiments of the present disclosure, the cell row 12 is disposed at one of the two sides of the heat management component 100 in the thickness direction of the heat management component 100.

In some embodiments, battery cells 11 of the cell rows 12 at the two sides of the heat management component 100 in the thickness direction of the heat management component 100 are offset from each other, which allows discharge positions of the emissions corresponding to the battery cells 11 at the two sides of the heat management component 100 in the thickness direction of the heat management component 100 to be offset from each other. Therefore, it is conducive to avoiding the occurrence of the eruption facing towards each other when the corresponding battery cells 11 at the two sides of the heat management component 100 in the thickness direction of the heat management component 100 discharge the emission, thereby further reducing the probability of thermal spreading.

In another exemplary embodiment of the present disclosure, the battery cells 11 of the cell rows 12 at the two sides of the heat management component 100 in the thickness direction of the heat management component 100 are offset from each other in the length direction of the heat management component 100, or the battery cells 11 of the cell rows 12 at the two sides of the heat management component 100 in the thickness direction of the heat management component 100 are offset from each other in the height direction of the heat management component 100, or the battery cells 11 of the cell rows 12 at the two sides of the heat management component 100 in the thickness direction of the heat management component 100 are offset from each other in both the length direction and the height direction of the heat management component 100.

In some embodiments, as shown in FIG. 4 and FIG. 6, the battery cell 11 has a pressure relief structure 111 at a side surface of the battery cell 11 facing towards the heat management component 100. The emission from the battery cell 11 is discharged out of the battery cell 11 through the pressure relief structure 111, and then is received by the discharge portion 2. In this way, a path along which the emission moves to the discharge portion 2 through the pressure relief structure 111 can be shortened, and the discharge efficiency is improved. Therefore, a probability of thermal spreading caused by impacting of a high-temperature emission on other battery cells 11 or a probability of insulation failure caused by impacting of the high-temperature emission on other components in the battery 300 can be lowered.

For example, the pressure relief structure 111 may be an explosion-proof valve or a weakened region on the battery cell 11. For example, the pressure relief structure 111 is an indentation formed at a housing of the battery cell 11.

In another exemplary embodiment of the present disclosure, the pressure relief structure 111 of the battery cell 11 is in direct communication with the discharge chamber 21 of the discharge portion 2. For example, the heat exchange portion 1 is located at a side of the heat management component 100 facing towards the battery cell 11. The heat exchange portion 1 may include a plurality of heat exchange sub-portions arranged at intervals, and the discharge portion 2 is partially located between two adjacent heat exchange sub-portions, or the pressure relief structure 111 of the battery cell 11 is in direct communication with the discharge chamber 21 of the discharge portion 2. For example, the pressure relief structure 111 of the battery cell 11 is in communication with the discharge chamber 21 of the discharge portion 2 through the communication path 12 of the heat exchange portion 1.

In some embodiments, as shown in FIG. 5, a protection member 14 is provided at the pressure relief structure 111 of the battery cell 11, and covers the pressure relief structure 111. The protection member 14 is configured to shield the emission discharged from the battery cell 11 through the pressure relief structure 111, to reduce the influence of the emission from the battery cell 11 on the battery cell 11 at one side of the heat management component 100 in the thickness direction of the heat management component 100 without affecting the smooth discharge of the emission from the battery cell 11, thereby further lowering the probability of thermal diffusion of the battery 300.

In another exemplary embodiment of the present disclosure, the protection member 14 is made of a fireproof material.

In other embodiments of the present disclosure, the arrangement of the guard 14 is not limited to the embodiments as described herein. In other embodiments, the discharge chamber 21 is defined by the heat management component 100 (the discharge chamber 21 is defined by the discharge portion 2 only, or the discharge chamber 21 is defined by the discharge portion 2 and the heat exchange portion 1 together, or the discharge chamber 21 is defined by the discharge portion 2, the heat exchange portion 1, and other portions of the heat management component 100 together). The inlet region 21a is formed at the wall surface of the discharge chamber 21. The discharge chamber 21 is adapted to receive the emission discharged from the battery cell 11 through the inlet region 21a. The protection member 14 is disposed in the discharge chamber 21, and an orthographic projection of the protection member 14 on the wall surface of the discharge chamber 21 covers at least part of the inlet region 21a. Therefore, a probability of thermal diffusion of the battery 300 can be reduced.

In some embodiments, the battery cell 11 is disposed at each of the two sides of the heat management component 100 in the thickness direction of the heat management component 100. The battery cell 11 has a pressure relief structure 111 at a side surface of the battery cell 11 facing towards the heat management component 100, and the pressure relief structures 111 of the battery cells 11 at the two sides of the heat management component 100 in the thickness direction of the heat management component 100 are offset from each other, which is beneficial to preventing the eruption of the corresponding battery cells 11 at the two sides of the heat management component 100 in the thickness direction of the heat management component 100 from facing towards each other when battery cells 11 discharge the emission, thereby further lowering the probability of thermal spreading. In this case, the battery cells 11 at the two sides of the heat management component 100 in the thickness direction of the heat management component 100 may be offset from or aligned with each other.

In another exemplary embodiment of the present disclosure, the pressure relief structures 111 of the battery cells 11 at the two sides of the heat management component 100 in the thickness direction of the heat management component 100 are offset from each other in the length direction of the heat management component 100, or the pressure relief structures 111 of the battery cells 11 at the two sides of the heat management component 100 in the thickness direction of the heat management component 100 are offset from each other in the height direction of the heat management component 100, or the pressure relief structures 111 of the battery cells 11 at the two sides of the heat management component 100 in the thickness direction of the heat management component 100 are offset from each other in both the length direction and the height direction of the heat management component 100.

In some embodiments, as shown in FIG. 12, the battery cell 11 includes a cylindrical battery 110. The heat exchange portion 1 has a first groove 6a at an outer surface of the heat exchange portion 1. The battery cell 11 is arranged in the first groove 6a. In this way, the cylindrical battery 110 may be at least partially received in the first groove 6a, which is beneficial to an increase in a heat exchange area of the heat exchange portion 1 and the cylindrical battery 110. Meanwhile, the occupied spaces of the battery cell 11 and the heat management component 100 in the thickness direction of the heat management component 100 can be saved, thereby improving the space utilization rate of the battery 300.

It can be understood that, when the heat exchange chamber 11A is defined by the heat management component 100 (the heat exchange chamber 11A is defined by the heat exchange portion 1 only, or the heat exchange chamber 11A is defined by the heat exchange portion 1 and the discharge portion 2 together, or the heat exchange chamber 11A is defined by the discharge portion 2, the heat exchange portion 1, and other portions of the heat management component 100 together), the arrangement of the first groove 6a can increase the contact area between the heat exchange chamber 11A and the heat exchange medium, thereby improving the heat exchange effect.

In some embodiments, as shown in FIG. 12, a shape of the first groove 6a matches a shape of the cylindrical battery 110. In this case, the first groove 6a has a curved groove surface, such as an arc groove surface, to ensure the accommodation space 70 of the first groove 6a. Meanwhile, the heat exchange area of the heat exchange portion 1 and the cylindrical battery 110 can be further increased.

In some embodiments, as shown in FIG. 12, the cylindrical battery 110 is attached to a groove surface of the first groove 6a, which further increases the heat exchange area of the heat exchange portion 1 and the cylindrical battery 110, thereby improving the heat exchange efficiency of the heat exchange portion 1 and the cylindrical monomer while realizing direct heat exchange between the cylindrical battery 110 and the heat exchange portion 1.

In some embodiments, the cylindrical battery 110 is provided with an attaching portion 110a at an outer peripheral wall of a housing of the cylindrical battery 110. The attaching portion 110a is attached to the groove surface of the first groove 6a and has the pressure relief structure 111. The communication opening is formed at the groove surface of the first groove 6a. The communication opening faces towards the pressure relief structure 111, and is arranged to avoid the heat exchange chamber 11A of the heat exchange portion 1. The emission from the cylindrical battery 110 is adapted to be discharged to the discharge portion 2 through the pressure relief structure 111 and the communication opening.

In some embodiments, the cell rows 12 are disposed at the two sides of the heat management component 100 in the thickness direction of the heat management component 100, respectively. Each of the cell row 12 includes at least one cylindrical battery 110. The cylindrical batteries 110 at the two sides of the heat management component 100 in the thickness direction of the heat management component 100 are offset from each other. For example, the cylindrical batteries 110 at the two sides of the heat management component 100 in the thickness direction of the heat management component 100 are offset from each other in the length direction of the heat management component 100. In other embodiments of the present disclosure, as shown in FIG. 12, the cylindrical batteries 11 at the two sides of the heat management component 100 in the thickness direction of the heat management component 100 may also be aligned with each other in the length direction of the heat management component 100.

In some embodiments, as shown in FIG. 12, the cell rows 12 are respectively disposed at the two sides of the heat management component 100 in the thickness direction of the heat management component 100 and include at least one cylindrical battery 110. The cylindrical battery 110 is provided with an attaching portion 110a at the outer peripheral wall of the cylindrical battery 110. The attaching portion 110a is attached to the groove surface of the first groove 6a and has the pressure relief structure 111. The pressure relief structures 111 of the battery cells 11 at the two sides of the heat management component 100 in the thickness direction of the heat management component 100 are offset from each other. It is beneficial to avoid the occurrence of opposing eruption of the corresponding battery cells 11 at the two sides of the heat management component 100 in the thickness direction of the heat management component 100 when each discharging the emission, to further reduce the probability of thermal spreading.

It can be understood that for the cylindrical battery 110, the attaching portion 110a is an arc surface. It can be realized that the corresponding pressure relief structures 111 at the two sides of the heat management component 100 in the thickness direction of the heat management component 100 are offset from each other by adjusting circumferential positions of the pressure relief structures 111 on the respective arc surfaces of the attaching portion 110a. In this case, the cylindrical batteries 110 at the two sides of the heat management component 100 in the thickness direction of the heat management component 100 may be offset from or aligned with each other.

In some embodiments, as shown in FIG. 13, a length of the battery cell 11 is greater than 0.6 m. The length of the battery cell 11 is greater than a width of the battery cell 11 and a thickness of the battery cell 11. In this case, the battery cell 11 may be formed as a blade battery, and the heat management component 100 is disposed at an end of the battery cell 11 in the length direction of the battery cell 11. Further, the heat management component 100 may exchange heat with the plurality of battery cells 11 sequentially arranged in the length direction of the heat management component 100.

For example, the battery cell 11 is provided with a pressure relief structure 111 at an end of the battery cell 11 in the length direction of the battery cell 11, and the pressure relief structure 111 faces towards the heat management component 100, in order to shorten a discharge path along which the emission from the battery cell 11 is discharged to the discharge portion 2.

In another exemplary embodiment of the present disclosure, a length direction of the heat management component 100 is perpendicular to the length direction of the battery cell 11, which facilitate the realization of a regular layout of the battery 300.

In other embodiments of the present disclosure, when the battery cell 11 is a blade battery, the heat management component 100 may also be disposed at a side of the battery cell 11 in the thickness direction of the battery cell 11, so that the heat management component 100 corporates with the large surface of the battery cell 11 in a thermally conductive manner.

A battery 300 according to an embodiment of a fourth aspect of the present disclosure includes the heat management component 100 according to the above embodiments of the first aspect of the present disclosure and a battery cell 11. The battery cell 11 is arranged on at least one side of the heat management component 100 in a thickness direction of the heat management component 100. The heat exchange portion 1 is arranged at a side of the heat management component 100 facing towards the battery cell 11.

With the battery 300 according to the embodiments of the present disclosure, by using the heat management component 100 described above, the space utilization rate of the battery 300 can be improved, and the use safety of the battery cell 11 can be ensured.

In another exemplary embodiment of the present disclosure, an arrangement of the battery cell 11 and the heat management component 100 in the battery 300 according to the embodiments of the fourth aspect of the present disclosure is the same as the arrangement of the battery cell 11 and the heat management component 100 in the battery 300 according to the embodiments of the third aspect of the present disclosure, and details thereof will be omitted herein.

An electric device 400 according to an embodiment of a fifth aspect of the present disclosure includes the battery 300 according to the above embodiments of the third aspect of the present disclosure, and the battery 300 is configured to supply power to the electric device 400. Therefore, by using the battery 300, use safety of the electric device 400 can be improved.

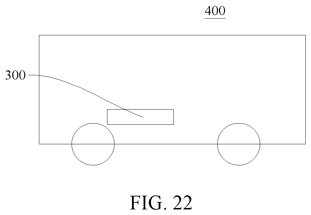

In another exemplary embodiment of the present disclosure, as shown in FIG. 22, when the battery 300 is applied to a vehicle, the battery 300 may be disposed at a bottom, a head, or a tail of the vehicle. The battery 300 may be used for power supply of the vehicle. For example, the battery 300 may be used as an operation power source of the vehicle. The vehicle may also include a controller and a motor. The controller is used for controlling the battery 300 to supply power to the motor, for example, for operation power demands for startup, navigation, and travel of the vehicle. In some embodiments of the present disclosure, the battery 300 may not only serve as the operation power source of the vehicle, but also may be used as a driving power source of the vehicle to replace or partially replace fuel or natural gas to provide the driving power to the vehicle.

Other arrangements and operations of the electric device 400 according to the embodiments of the present disclosure are known to those of ordinary skill in the art, and the description thereof in detail will be omitted herein.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "circumferential", etc., is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. Therefore, features associated with "first" and "second" may explicitly or implicitly include one or more of these features. In the description of the present disclosure, "a plurality of' means two or more, unless otherwise specifically defined.

In the present disclosure, it should be noted that, unless otherwise clearly specified and limited, terms such as "install", "connect", "connect to", and the like should be understood in a broad sense. For example, it may be a fixed connection or a detachable connection or connection as one piece; a mechanical connection or an electrical connection; a direct connection or an indirect connection through an intermediate; or internal communication of two components. For those of ordinary skill in the art, the specific meaning of the above terms in the present disclosure should be understood according to specific circumstances.

In the description of this specification, descriptions with reference to the terms "an embodiment," "some embodiments," "schematic embodiments," "examples," "specific examples," or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it can be understood by those of ordinary skill in the art that various changes, modifications, substitutions and alterations may be made to these embodiments without departing from the principles and spirit of the present disclosure. The scope of the present disclosure is defined by the claims and their equivalents.

## Claims

1. A heat management component (100), comprising:
a heat exchange portion (1) configured to exchange heat with a battery cell (11); and
a discharge portion (2) configured to receive an emission from the battery cell (11), the discharge portion (2) being at least partially connected to the heat exchange portion (1) in a thermally conductive manner.

2. The heat management component (100) according to claim 1, wherein:
the heat management component (100) is of an elongated shape;
a height of the heat management component (100) is greater than a thickness of the heat management component (100); and
the heat exchange portion (1) and the discharge portion (2) are arranged in a thickness direction of the heat management component (100).

3. The heat management component (100) according to claim 2, wherein in the thickness direction of the heat management component (100), the heat exchange portion (1) is disposed at an outer side of the discharge portion (2) in such a manner that the heat exchange portion (1) is located closer to a battery cell (11) arranged at an outer side of the heat management component (100) in the thickness direction of the heat management component (100) than the discharge portion (2).

4. The heat management component (100) according to claim 3, wherein the heat exchange portion (1) is arranged at each of two sides of the discharge portion (2).

5. The heat management component (100) according to claim 4, wherein:
the discharge portion (2) comprises one discharge chamber (21) configured such that an emission in the discharge chamber (21) is adapted to exchange heat with the two heat exchange portions (1); or
the discharge portion (2) comprises two discharge chambers (21) arranged in the thickness direction of the heat management component (100), each of the two discharge chambers (21) being configured such that an emission in the discharge chamber (21) is adapted to exchange heat with the heat exchange portion (1) corresponding to the discharge chamber (21).

6. The heat management component (100) according to any one of claims 3 to 5, comprising:
a body (3); and
a heat exchanger (4) disposed at least one side of the body (3) in a thickness direction of the body (3), wherein:
the heat exchanger (4) is constructed as the heat exchange portion (1); and
the discharge portion (2) is constructed by the body (3) alone, or the discharge portion (2) is defined by the body (3) and the heat exchanger (4) together.

7. The heat management component (100) according to claim 6, wherein:
a discharge chamber (21) is defined by the discharge portion (2); and
the heat exchanger (4) has a first discharge path (12) extending to the discharge chamber (21), the first discharge path (12) being in communication with the discharge chamber (21), and the discharge chamber (21) being adapted to receive the emission from the battery cell (11) via the first discharge path (12).

8. The heat management component (100) according to claim 6 or 7, wherein:
the heat exchanger (4) is arranged at each of two sides of the body (3) in the thickness direction of the body (3);
a heat exchange chamber (11) is defined by the heat exchanger (4), the heat exchange chamber (11) having an inlet (11a) and an outlet (11b) to allow a heat exchange medium to flow to the heat exchange chamber (11) through the inlet (11a) and flow out of the heat exchange chamber (11) through the outlet (11b); and
the heat exchange chambers (11) at the two sides of the body (3) in the thickness direction of the body (3) are connected in series or parallel.

9. The heat management component (100) according to any one of claims 1 to 8, wherein:
a discharge chamber (21) is defined by the discharge portion (2);
the discharge portion (2) has inlet regions (21a) at two opposite sides of the discharge portion (2), the inlet regions (21a) being in communication with the discharge chamber (21);
the discharge chamber (21) is adapted to receive the emission from the battery cell (11) through the inlet regions (21a); and
the inlet regions (21a) at the two opposite sides of the discharge portion (2) are offset from each other in a length direction of the heat management component (100).

10. The heat management component (100) according to claim 9, comprising:
a body (3); and
heat exchangers (4) arranged at two sides of the body (3) in a thickness direction of the body (3), the heat exchanger (4) being constructed as the heat exchange portion (1),
wherein the discharge portion (2) is constructed by the body (3) alone, the inlet regions (21a) being formed at the body (3); or
wherein the discharge portion (2) is defined by the body (3) and the heat exchangers (4) together, the inlet regions (21a) being formed at the heat exchangers (4).

11. The heat management component (100) according to any one of claims 1 to 10, wherein a heat exchange chamber (11) is defined by the heat exchange portion (1) and is adapted to accommodate a heat exchange medium.

12. The heat management component (100) according to claim 11, wherein the heat exchange portion (1) has an inlet (11a) and an outlet (11b) to allow the heat exchange medium to flow to the heat exchange chamber (11) through the inlet (11a) and flow out of the heat exchange chamber (11) through the outlet (11b).

13. The heat management component (100) according to claim 11 or 12, wherein the heat exchange medium comprises a gas, a liquid, or a gas-liquid mixture.

14. The heat management component (100) according to any one of claims 11 to 13, wherein the heat exchange chamber (11) comprises a plurality of heat exchange sub-chambers (111).

15. The heat management component (100) according to claim 14, wherein the heat exchange portion (1) has an inlet (11a) and an outlet (11b), each of the plurality of heat exchange sub-chambers (111) being in communication with the inlet (11a) and the outlet (11b).

16. The heat management component (100) according to any one of claims 11 to 15, wherein a first heat conductive member (5) is disposed in the heat exchange chamber (11).

17. The heat management component (100) according to claim 16, wherein the heat exchange chamber (11) is divided into a plurality of heat exchange sub-chambers (111) by the first heat conductive member (5).

18. The heat management component (100) according to any one of claims 1 to 17, comprising two outer side plates (6) arranged opposite to each other, at least one of the two outer side plates (6) being constructed as the heat exchange portion (1), and the battery cell (11) being adapted to be arranged at an outer side of the outer side plate (6) in a thickness direction of the outer side plate (6).

19. The heat management component (100) according to claim 18, wherein:
the outer side plate (6) is adapted to exchange heat with a cylindrical battery (110); and
the outer side plate (6) has a first groove (6a), the first groove (6a) being formed at an outer side wall of the outer side plate (6) to receive at least part of the cylindrical battery (110).

20. The heat management component (100) according to claim 19, wherein the first groove (6a) has a curved groove surface.

21. The heat management component (100) according to claim 20, wherein the outer side wall of the outer side plate (6) has a plurality of first protrusions (6b), the first groove (6a) being defined between two adjacent first protrusions (6b) of the plurality of first protrusions (6b).

22. The heat management component (100) according to claim 21, wherein the outer side plate (6) is provided with a plurality of second protrusions (6d) at an inner side wall of the outer side plate (6), a second groove (6c) being defined between two adjacent second protrusions (6d) of the plurality of second protrusions (6d), the plurality of second protrusions (6d) being opposite to the plurality of first protrusions (6b) in a thickness direction of the heat exchange portion (1), and the second groove (6c) being opposite to the first groove (6a) in the thickness direction of the heat exchange portion (1).

23. The heat management component (100) according to claim 18, wherein the outer side plate (6) has a planar outer side wall.

24. The heat management component (100) according to claim 23, wherein the outer side plate (6) is provided with a projection (6e) at an inner wall surface of the outer side plate (6), a heat exchange chamber (11) being formed at a position corresponding to the projection (6e).

25. The heat management component (100) according to any one of claims 18 to 24, wherein:
the outer side plate (6) has an inlet region (21a);
the discharge chamber (21) is adapted to receive the emission from the battery cell (11) through the inlet region (21a); and
the outer side plate (6) has an insulator disposed at an outer peripheral region of the inlet region (21a).

26. The heat management component (100) according to any one of claims 1 to 25, wherein a second heat conductive member is disposed between the heat exchange portion (1) and the discharge portion (2).

27. A case assembly (200), comprising the heat management component according to any one of claims 1 to 26, wherein the case assembly (200) defines an accommodation cavity (70a) for accommodating the battery cell (11).

28. The case assembly (200) according to claim 27, further comprising:
a side wall plate (7); and
a partition beam (8) located in a space (70) enclosed by the side wall plate (7) to divide the space (70) into a plurality of accommodation cavities (70a),
wherein at least one of the side wall plate (7) and the partition beam (8) is constructed as the heat management component (100).

29. The case assembly (200) according to claim 28, wherein:
the partition beam (8) comprises a longitudinal beam (82) extending in a length direction of the case assembly (200), the longitudinal beam (82) being constructed as the heat management component (100); or
the partition beam (8) comprises a transverse beam (81) extending in a width direction of the case assembly (200), the transverse beam (81) being constructed as the heat management component (100); or
the partition beam (8) comprises a longitudinal beam (82) extending in a length direction of the case assembly (200) and a transverse beam (81) extending in a width direction of the case assembly (200), at least one of the longitudinal beam (82) and the transverse beam (81) being constructed as the heat management component (100).

30. The case assembly (200) according to claim 28 or 29, wherein:
the partition beam (8) is constructed as the heat management component (100); and
the side wall plate (7) has a second discharge path in communication with a discharge chamber (21) of the discharge portion (2).

31. The case assembly (200) according to any one of claims 27 to 30, further comprising a top cover (9), the heat management component (100) being disposed at the top cover (9).

32. The case assembly (200) according to any one of claims 27 to 31, further comprising a bottom plate (10), the heat management component (100) being disposed at the bottom plate (10).

33. A battery (300), comprising:
a case assembly (200) according to any one of claims 27 to 32; and
a battery cell (11) arranged in the accommodation cavity (70a),
wherein the heat exchange portion (1) is disposed at a side of the heat management component (100) facing towards the battery cell (11).

34. The battery (300) according to claim 33, wherein a cell row (12) is disposed on at least one side of the heat management component (100) in a thickness direction of the heat management component (100), the cell row (12) comprising a plurality of battery cells (11) sequentially arranged in a length direction of the heat management component (100), and each of the plurality of battery cells (11) being adapted to discharge the emission to the discharge portion (2) independently.

35. The battery (300) according to claim 34, wherein:
a plurality of cell rows (12) is disposed on at least one side of the discharge portion (2) in a thickness direction of the discharge portion (2), the plurality of cell rows (12) being sequentially arranged in a height direction of the discharge portion (2); and
two cell rows (12) of the plurality of cell rows (12) disposed on at one side of the discharge portion (2) in the thickness direction of the discharge portion (2) are aligned with or offset from each other in a length direction of the discharge portion (2).

36. The battery (300) according to claim 34 or 35, wherein a thickness direction of each of the plurality of battery cells (11) is the same as a height direction of the heat management component (100).

37. The battery (300) according to claim 36, wherein:
the number of the cell rows (12) at one side of the discharge portion (2) in the thickness direction of the discharge portion (2) is smaller than the number of the battery cells (11) of each of the cell rows (12) at one side of the discharge portion (2) in the thickness direction of the discharge portion (2); and/or
the number of the cell rows (12) at one side of the discharge portion (2) in the thickness direction of the discharge portion (2) ranges from 1 to 3.

38. The battery (300) according to claim 36, further comprising a fixing member (13) disposed at a side of the cell row (12) in a thickness direction of the cell row (12) and abutting with the cell row (12) at an outermost side, the fixing member (13) being fixedly connected to the case assembly (200).

39. The battery (300) according to any one of claims 33 to 38, wherein the cell row (12) is arranged at each of two sides of the heat management component (100) in a thickness direction of the heat management component (100).

40. The battery (300) according to claim 39, wherein battery cells (11) of the cell rows (12) at the two sides of the heat management component (100) in the thickness direction of the heat management component (100) are offset from each other.

41. The battery (300) according to any one of claims 33 to 40, wherein the battery cell (11) has a pressure relief structure (111) at a side surface of the battery cell (11) facing towards the heat management component (100).

42. The battery (300) according to claim 41, wherein a protection member (14) is provided at the pressure relief structure (111) of the battery cell (11) and covering the pressure relief structure (111), and the protection member (14) being configured to shield the emission discharged from the battery cell (11) through the pressure relief structure (111).

43. The battery (300) according to any one of claims 33 to 42, wherein:
the battery cell (11) comprises a cylindrical battery (110);
the heat exchange portion (1) has a first groove (6a) at an outer surface of the heat exchange portion (1), the battery cell (11) being arranged in the first groove (6a).

44. The battery (300) according to claim 43, wherein a shape of the first groove (6a) matches a shape of the cylindrical battery (110).

45. The battery (300) according to claim 43 or 44, wherein the cylindrical battery (110) is attached to a groove surface of the first groove (6a).

46. The battery (300) according to any one of claims 33 to 45, wherein:
a length of the battery cell (11) is greater than 0.6 m; and
the length of the battery cell (11) is greater than a width of the battery cell (11) and a thickness of the battery cell (11); and
the heat management component (100) is disposed at an end of the battery cell (11) in a length direction of the battery cell (11).

47. The battery (300) according to claim 46, wherein a length direction of the heat management component (100) is perpendicular to the length direction of the battery cell (11).

48. A battery (300), comprising:
the heat management component (100) according to any one of claims 1 to 26; and
a battery cell (11) arranged on at least one side of the heat management component (100) in a thickness direction of the heat management component (100),
wherein the heat exchange portion (1) is arranged at a side of the heat management component (100) facing towards the battery cell (11).

49. An electric device (400), comprising:
the battery (300) according to any one of claims 33 to 48, the battery (300) being configured to supply power to the electric device (400).
